# EUROPEAN PATENT SPECIFICATION

(11) **EP 1 383 327 B1**
(45) Date of publication and mention of the grant of the patent: **25.12.2013**
(21) Application number: 03012924.1
(22) Date of filing: 06.06.2003
(51) Int. Cl.: H04N 21/436, H04N 21/4627

(54) **Content distributing system and data-communication controlling device**
System zur Inhaltsverteilung und Datenkommunikationskontrollvorrichtung
Système de distribution de contenu et dispositif de contrôle de communication de données

(30) Priority: 11.06.2002 JP 2002170252
(43) Date of publication of application: 21.01.2004
(73) Proprietor: Panasonic Corporation, Kadoma-shi Osaka 571-8501 (JP)
(72) Inventor: Yuichi, Futa, Osaka-fu 534-0002 (JP); Motoji,Ohmori, Osaka-fu 573-0071 (JP); Hirohito, Kitatora, Osaka-fu 531-0063 (JP); Natsume, Matsuzaki, Osaka-fu 562-0023 (JP); Makoto,Tatebayashi, Hyogo-ken 665-0852 (JP); Kaoru,Yokota, Hyogo-ken 659-0016 (JP); Hiroki,Yamauchi, Osaka-fu 567-0828 (JP); Yuusaku,Ohta, Osaka-fu 572-0055 (JP)
(74) Representative: Grünecker, Kinkeldey, Stockmair & Schwanhäusser

(56) References cited:
- EP-A2- 1 209 897
- WO-A1-00/54493
- WO-A1-00/56068
- US-A1- 2002 018 568
- SAITO T ET AL: "HOME GATEWAY ARCHITECTURE AND ITS IMPLEMENTATION" IEEE TRANSACTIONS ON CONSUMER ELECTRONICS, IEEE SERVICE CENTER, NEW YORK, NY, US, vol. 46, no. 4, 1 November 2000 (2000-11-01), pages 1161-1166, XP001093610 ISSN: 0098-3063

## Description

### BACKGROUND OF THE INVENTION

### (1) Field of the Invention

The present invention relates to a content distributing technique for transmitting and receiving content between devices connected to a home network.

### (2) Description of the Related Art

In recent years, the business of distributing "content" such as movies and music as being recorded on DVDs or CDs, or via the Internet or broadcast satellites has been widespread. Such content distributed from suppliers to users is copyrighted. In view of protecting the copyright, the suppliers are required to manage content so as not to allow the users to use the content beyond the scope of their license.

The non-patent document 1 discloses a technique relating to DTCP (Digital Transmission Content Protection). The DTCP technique provides a system for mutual authentication between devices connected via the IEEE1394 high-speed serial bus. According to this technique, devices licensed to use content are each given a secret key. When one device intends to transmit or receive content to or from another device, the two devices first perform mutual authentication between them using their secret keys. Then, the device transmits or receives the content to the other device using a shared key resulting from the mutual authentication. Without an authentic license, therefore, a device cannot use content even if it belongs to a home network.

While great many pieces of content are provided to the users, some of them are highly valuable content (high-value content) for which a license that limits the number of copying times or the like is set. Examples of such high-value content include high-quality digital video, and movies released just recently. If such high-value content is distributed to a PC (personal computer) within a home network, there may be a possibility that the PC is engaged in excessive use of the high-value content beyond the scope of its license, by decoding and rewriting the license. To avoid this, it is desired to prohibit transmission of high-value content to PCs.

### Non-patent Document 1:

5C Digital Transmission Content Protection White Paper (Revision 1.0 July 14, 1998)

EP 1 209 897 (A2) describes a print management system that includes a policy that determines a protection level for a document to be printed. The document is printed using forgery detection and deterrence technologies, such as fragile and robust watermarks, glyphs, and digital signatures, that are appropriate to the level of protection determined by the policy. A plurality of printers are managed by a print management system. Each printer can provide a range of protection technologies. The policy determines the protection technologies for the document to be printed. The print management system routes the print job to a printer that can apply the appropriate protections and sets the appropriate parameters in the printer. Copy evidence that can establish that a document is a forgery and/or tracing information that identifies the custodian of the document and restrictions on copying of the document and use of the information in the document are included in the watermark that is printed on the document. A document can be verified as an original or established as a forgery by inspecting the copy evidence and/or tracing information in the watermark.

US 2002/018568 A1 provides Systems and methods for encrypting content sent to a user. The user terminal is assigned a serial number. When content is received by the user terminal, it is encrypted and the serial number is embedded into the encrypted content. The content is decrypted if the serial number embedded in the encrypted content is the serial number associated with the user terminal. Content may also be simultaneously stored and displayed.

WO 00/56068 A1 specifies a method for providing local security of audio and video content during transmission and storage within digital home networks. Scrambled content may be recorded in all conditions; however, only authorized copies are processed for descrambling and viewing. Content is protected within a network by rebundling the keys required for descrambling, e.g., the TDES (Triple DES) keys, into a new Entitlement Control Message ECM (Local Entitlement Control Message (LECM)), which is protected by a local public key.

### SUMMARY OF THE INVENTION

In view of the above problems, the object of the present invention is defined in the claims.

To achieve the above object, the present invention provides a content distributing system in which a transmission device transmits content to one or more reception devices via a routing device. The transmission device transmits content and a device ID of one of the reception devices to the routing device, the content having additional information relating to use of the content. The routing device (a) stores one or more judgment tables, each of which includes additional information and a device ID of a reception device belonging to a category specified as being permitted to use content having the additional information included therein, (b) receives the content and the device ID transmitted from the transmission device, and selects, out of the judgment tables, a judgment table that includes additional information matching the additional information of the received content, and (c) judges whether the received device ID is included in the selected judgment table, and (i) transmits the received content to the one of the reception devices identified by the received device ID when judging affirmatively, and (ii) prohibits the transmission when judging negatively. The one or more reception devices each receive content when the content is transmitted thereto from the routing device.

According to this construction, the permission status to transmit content to a device can be judged based upon additional information of the content and a category of the device. When judged not to be permitted, the transmission of the content is prohibited. In this way, content can be protected.

The present invention also provides a content distributing system in which a transmission device transmits content to one or more reception devices via a routing device. The transmission device transmits content and a network address of one of the reception devices to the routing device, the content having additional information relating to use of the content. The routing device (a) stores an address conversion table and one or more judgment tables, the address conversion table associating a device ID of each reception device with a network address, the one or more judgment tables each including additional information and a device ID of a reception device belonging to a category specified as being permitted to use content having the additional information included therein, (b) receives the content and the network address transmitted from the transmission device, obtains a device ID that is associated with the received network address by referring to the address conversion table, and selects, out of the judgment tables, a judgment table that includes additional information matching the additional information of the received content, and (c) judges whether the obtained device ID is included in the selected judgment table, and (i) transmits the received content to the one of the reception devices identified by the obtained device ID when judging affirmatively, and (ii) prohibits the transmission when judging negatively. The one or more reception devices each receive content when the content is transmitted thereto from the routing device.

According to this construction, the permission status to transmit content to a device can be judged based upon additional information of the content and a category of the device. By excluding an identifier of a PC from a judgment table that includes additional information of high-value content, transmission of high-value content to a PC can be prohibited. In this way, content can be protected.

Here, the routing device may include a table-generation-information storing unit operable to store (a) category information indicating a category to which each reception device belongs, in association with (b) additional information of content that is permitted to be used by a reception device belonging to the category, a device-information obtaining unit operable to obtain, from a reception device, a device ID of the reception device and category information indicating a category to which the reception device belongs, and a table generating unit operable to extract, from the table-generation-information storing unit, additional information of content that is permitted to be used by the reception device whose device ID has been obtained by the device-information obtaining unit, according to the category information obtained by the device-information obtaining unit, and generate a judgment table that includes the extracted additional information and the obtained device ID.

According to this construction, by associating, in advance, category information for such a device as a PC whose content protection function is low not with additional information of high-value content but with additional information of free content, transmission of high-value content to a PC can be prohibited. In this way, high-value content can be protected.

Here, in the routing device, the device-information obtaining unit may be operable to further obtain, from the reception device, a certificate that is used to authenticate the device ID and the category information, and the table generating unit may include an authentication unit operable to check the certificate obtained by the device-information obtaining unit, so as to authenticate the device ID and the category information, an address generating unit operable to generate a network address when the device ID and the category information have been successfully authenticated by the authentication unit, and an address-conversion-table generating unit operable to transmit the generated network address to the reception device whose device ID has been obtained by the device-information obtaining unit, and generate an address conversion table associating the generated network address with the obtained device ID.

According to this construction, a network address is assigned only to a device whose certificate has been successfully authenticated. Therefore, a PC is prohibited from tampering its device identifier or category information so as to impersonate, for example, a TV, with the intension to receive high-value content.

Here, the routing device may receive, from the one of the reception devices, (a) request information indicating a request for content and (b) a network address , and transmits the received request information and the received network address to the transmission device, and the transmission device may receive, from the one of the reception devices, the request information and the network address via the routing device, and transmits the content corresponding to the request information and the received network address to the routing device.

According to this construction, even when the transmission device has a plurality of pieces of content, the transmission device can select a piece of content requested by the reception device and transmit the selected piece of content to the routing device.

Here, the content may be composed of (a) content information including video data and audio data, and (b) the additional information, the transmission device may share a different device key with each reception device, the transmission device may encrypt the content information using a device key shared with the one of the reception devices, so as to generate encrypted content information, and transmit encrypted content that is composed of the encrypted content information and the additional information, to the routing device, the routing device may receive the encrypted content, and transmit the encrypted content to the one of the reception devices when judging that the encrypted content is permitted to be transmitted thereto, and the one of the reception devices may receive the encrypted content from the routing device and decrypts the encrypted content information using the device key shared with the transmission device.

According to this construction, the transmission device shares a different device key with each reception device. Therefore, even if an unauthorized device obtains content, which is in an encrypted form, on a communication path, such a device does not have an appropriate device key and therefore cannot decrypt the encrypted content. In this way, an unauthorized device is prohibited from using content.

Here, the content may be composed of (a) content information including video data and audio data, and (b) the additional information, the routing device may share a content key with the transmission device and share a different device key with each reception device, the transmission device may encrypt the content information using the content key, so as to generate encrypted content information, and transmit encrypted content that is composed of the encrypted content information and the additional information, to the routing device, the routing device may receive the encrypted content, and when judging that the encrypted content is permitted to be transmitted to the one of the reception devices, (a) decrypt the encrypted content information using the content key so as to generate content information, (b) encrypt the generated content information using a device key shared with the one of the reception devices so as to generate encrypted content information, and transmit encrypted content that is composed of the encrypted content information and the additional information, totheoneof the reception devices, and the one of the reception devices may receive the encrypted content from the routing device and decrypt the encrypted content information using the device key shared with the routing device.

According to this construction, the transmission device is not required to store a different device key for each reception device. Therefore, the processing load of the transmission device for encryption can be alleviated.

Here, the content distributing system may further include a table updating device that transmits, to the routing device, update-information to be used for updating a judgment table stored in the routing device. The routing device may receive the update-information from the table updating device, and update the judgment table based upon the received update-information.

According to this construction, a device ID of a device engaged in an unauthorized conduct can be deleted from a judgment table in response to update-information transmitted by the table updating device.

### BRIEF DESCRIPTION OF THE DRAWINGS

These and other objects, advantages and features of the invention will become apparent from the following description thereof taken in conjunction with the accompanying drawings that illustrate a specific embodiment of the invention.

In the drawings:
FIG. 1 shows the construction of a content distributing system 1;
FIG. 2 is a block diagram showing the construction of a broadcast receiving device 10;
FIG. 3 shows the data structure of content;
FIG. 4 is a block diagram showing the construction of a TV 20;
FIG. 5 is a block diagram showing the construction of a PC 30;
FIG. 6 is a block diagram showing the construction of a data-communication controlling device 40;
FIG. 7 shows the data structure of an address conversion table stored in the data-communication controlling device 40;
FIG. 8A shows the data structure of a judgment table "A" stored in the data-communication controlling device 40;
FIG. 8B shows the data structure of a judgment table "B" stored in the data-communication controlling device 40;
FIG. 9 is a flowchart showing a device ID registration process;
FIG. 10 is a flowchart showing a content distribution process;
FIG. 11 is a flowchart showing a judgment process for judging whether content is permitted to be transmitted;
FIG. 12 is a flowchart showing a judgment table updating process;
FIG. 13 shows the construction of a content distributing system 2;
FIG . 14 shows the data structure of an address conversion table 500 stored in a data-communication controlling device 40a;
FIG. 15 is a flowchart showing a device ID registration process in the content distributing system 2; and
FIG. 16 is a flowchart showing a content distribution process in the content distributing system 2.

### DESCRIPTION OF THE PREFERRED EMBODIMENTS

### <First Embodiment>

The following describes a content distributing system 1 as a first embodiment of the present invention, with reference to the drawings.

### <Construction>

FIG . 1 shows the construction of the content distributing system 1. As shown in the figure, the content distributing system 1 is composed of a broadcast receiving device 10, a TV (television) 20, a PC (personal computer) 30, a data-communication controlling device 40, a table updating server 50, and a broadcast device 60.

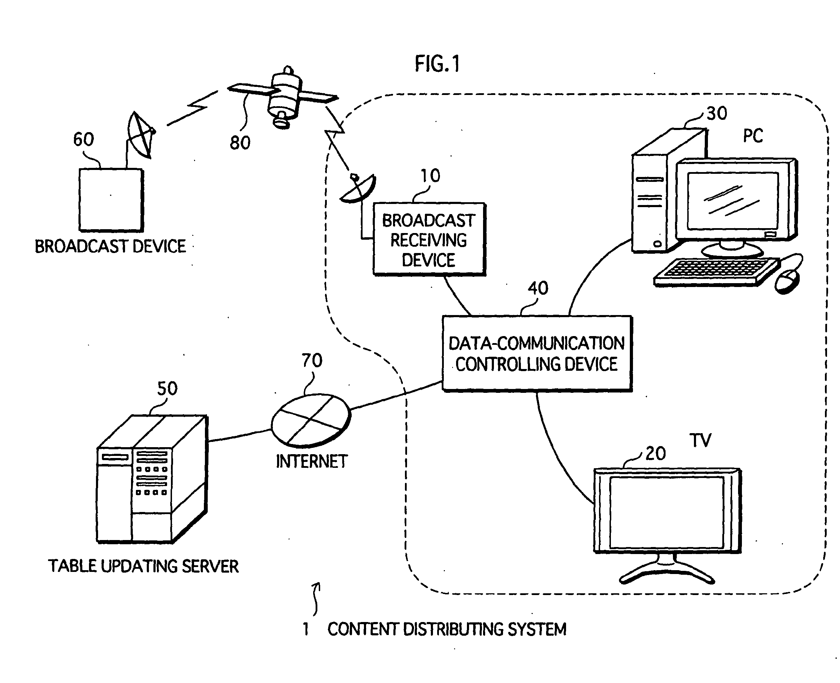

In FIG. 1, the broadcast receiving device 10, the TV 20, the PC 30, and the data-communication controlling device 40 encircled by a broken line are devices placed in a home of the user who views and/or listens to content. The broadcast receiving device 10, the TV 20, and the PC 30 are each connected to the data-communication controlling device 40 via a LAN cable, and communicate with the data-communication controlling device 40. The table updating server 50 and the broadcast device 60 are devices placed in a content provision center that provides content. The table updating server 50 is connected to the data-communication controlling device 40 via an Internet 70. The broadcast device 60 broadcasts content via a broadcast satellite 80.

The following describes each component of the system 1 in detail.

### 1. Broadcast Receiving Device 10

The broadcast receiving device 10 receives and stores content that is broadcasted from the broadcast device 60 via the broadcast satellite 80. Within the home network, the broadcast receiving device 10 functions as a server for providing content. The broadcast receiving device 10 is connected to the data-communication controlling device 40 via a LAN cable. The broadcast receiving device 10 receives a request for playing back content (hereafter, a "content request" ) from the TV 20 or the PC 30 via the data-communication controlling device 40, and transmits the requested content to the data-communication controlling device 40.

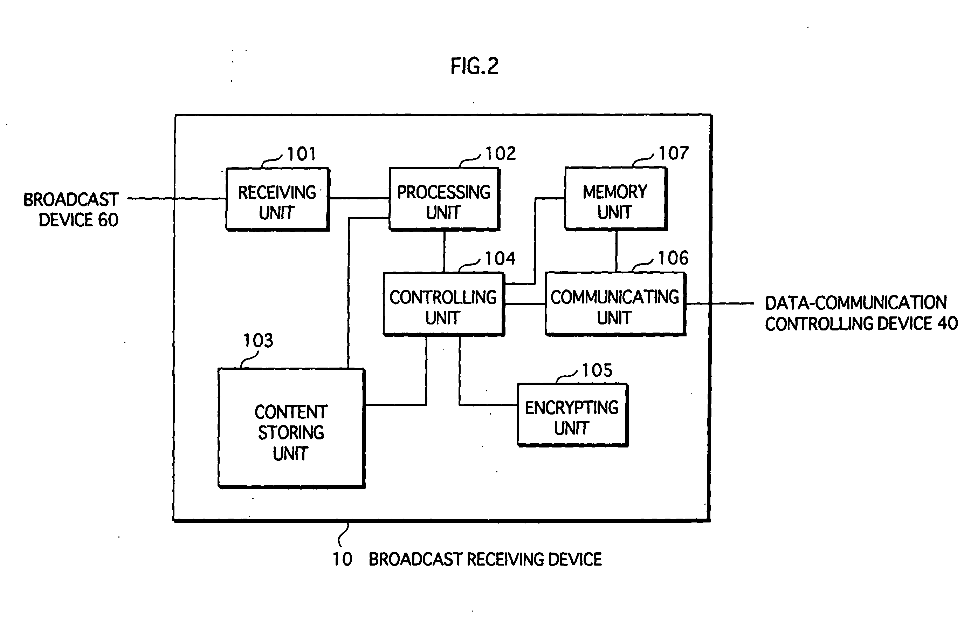

FIG. 2 is a block diagram showing the construction of the broadcast receiving device 10. As shown in the figure, the broadcast receiving device 10 is composed of a receiving unit 101, a processing unit 102, a content storing unit 103, a controlling unit 104, an encrypting unit 105, a communicating unit 106, and a memory unit 107.

### (1) Receiving Unit 101

The receiving unit 101 includes an antenna, and receives, via the antenna, a digital broadcast wave that is broadcasted from the broadcast device 60 via the broadcast satellite 80. The receiving unit 101 extracts, from the received digital broadcast wave, packets that constitute content, and outputs the extracted packets one after another to the processing unit 102.

### (2) Processing Unit 102

The processing unit 102 receives packets one after another from the receiving unit 101, and reconstructs content using the received packets, and stores the reconstructed content into the content storing unit 103.

### (3) Content Storing Unit 103

The content storing unit 103 is specifically a hard disk unit, and stores content that is outputted from the processing unit 102.

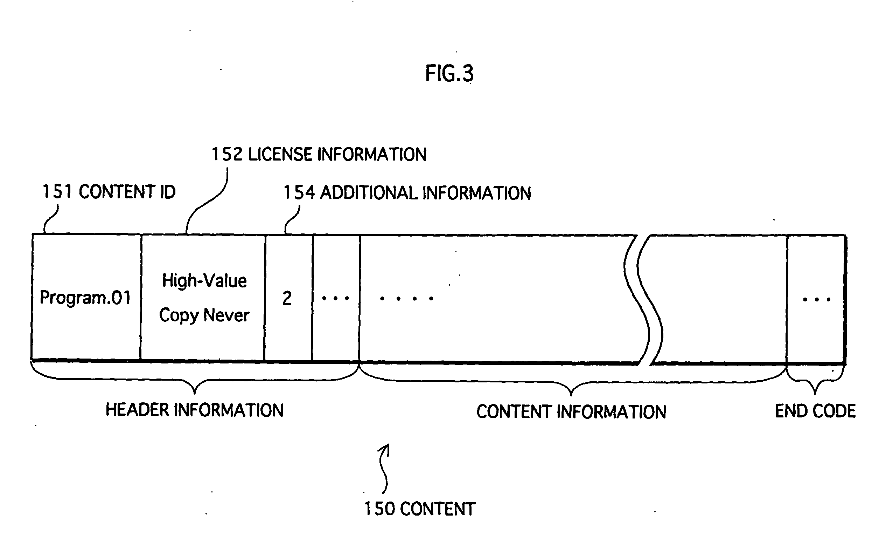

The content 150 shown in FIG. 3 is one example of content stored in the content storing unit 103 . As shown in the figure, the content 150 is composed of header information, content information, and end code. The header information includes "content ID" 151, "license information" 152, "additional information" 154, "data size of header information", and the like.

The "content ID" is an ID used to uniquely identify content. The "content ID" 151 of the content 150 is "Program. 01" .

The "license information" is information describing a content type and copy control information of content. To be specific, the content type is "High-Value" or "Free", and the copy control information is "Copy Free", "Copy Once", "Copy No More", or "Copy Never". In the case of the "license information" 152 of the content 150, the content type is "High-Value" and the copy control information is "Copy Never" .

The "additional information" is used to judge whether content is permitted to be distributed when the content is distributed to a certain device within the home network via a LAN cable. The "additional information" is a flag set at "0", "1", or "2". The "additional information" 154 of the content 150 is "2" . The additional information is described in more detail later.

The "data size of header information" is a data length of the header information expressed in units of bytes. It should be noted here that the "data size of header information" is not shown in FIG. 3.

The content information is specifically main data of the content. The end code is a predetermined bit sequence representing the end of the content.

### (4) Controlling Unit 104

The controlling unit 104 includes a CPU, a ROM, a RAM, and the like. The controlling unit 104 controls the entire broadcast receiving device 10 by its CPU executing a computer program stored in its ROM.

The controlling unit 104 receives a content request from the data-communication controlling device 40 via the communicating unit 106. The controlling unit 104 reads a content ID included in the received request, and reads content having the same content ID, from the content storing unit 103. The controlling unit 104 outputs the read content to the encrypting unit 105.

The controlling unit 104 receives encrypted content from the encrypting unit 105, and outputs the encrypted content to the communicating unit 106.

### (5) Encrypting Unit 105

The encrypting unit 105 includes a CPU, a ROM, a RAM, and the like, and internally stores a content key "KC" . The content key "KC" is recorded in advance on the ROM, and this key is shared with the data-communication controlling device 40.

The encrypting unit 105 receives content from the controlling unit 104, and encrypts the received content in the following way, so as to generate encrypted content.

The encrypting unit 105 first refers to the "data size of header information" included in header information of the content, to detect a start position of content information of the content. The encrypting unit 105 then starts, from the detected start position, encrypting the content information using the content key "KC" as an encryption key, according to the encryption algorithm "E1" so as to generate encrypted content information. The encrypting unit 105 continues the encryption process of the content information until detecting the end code. It should be noted here that the DES (Data Encryption Standard) is specifically employed as the encryption algorithm "E1"

In the above-described way, the encrypting unit 105 generates the encrypted content that is composed of header information, the encrypted content information, and end code, and outputs the encrypted content to the controlling unit 104.

### (6) Communicating Unit 106

The communicating unit 106 is a LAN-connected unit including an IEEE1394 connector and the like.

When the communicating unit 106 is newly connected to the home network by establishing connection to the data-communication controlling unit 40 via a LAN cable, the communicating unit 106 reads a device ID "IDC" and a certificate "CIDC" stored in the memory unit 107, and transmits the read device ID "IDC" and certificate "CIDC" to the data-communication controlling device 40. This processing is executed only when the broadcast receiving device 10 establishes connection to the data-communication controlling device 40 for the first time.

The communicating unit 106 receives a network address "IPC" from the data-communication controlling device 40, and stores the received network address "IPC" into the memory unit 107. The network address "IPC" is specifically an IP address.

Also, the communicating unit 106 receives encrypted content from the controlling unit 104, divides the encrypted content into packets, and transmits the packets one after another to the data-communication controlling device 40.

### (7) Memory Unit 107

The memory unit 107 is connected to the communicating unit 106. In the memory unit 107, the network address "IPC", the device ID "IDC", and the certificate "CIDC" are stored. As described above, the network address "IPC" is an IP address that is transmitted from the data-communication controlling device 40 when the broadcast receiving device 10 establishes connection to the data-communication controlling device 40. The device ID "IDC" is a MAC address assigned to a NIC (Network Interface Card) at the time of manufacture. The certificate "CIDC" has been issued by a certification authority and is used to authenticate the device ID "IDC".

It should be noted here that the device ID "IDC" and the certificate "CIDC" are stored at an OS level or a BIOS level to prevent them from being tampered with by the user. 2. TV 20

The TV 20 is a device for decoding, and playing back content, i.e., displaying content. The TV 20 is specifically a computer system that is composed of a microprocessor, a ROM, a RAM, a LAN-connected unit, and the like.

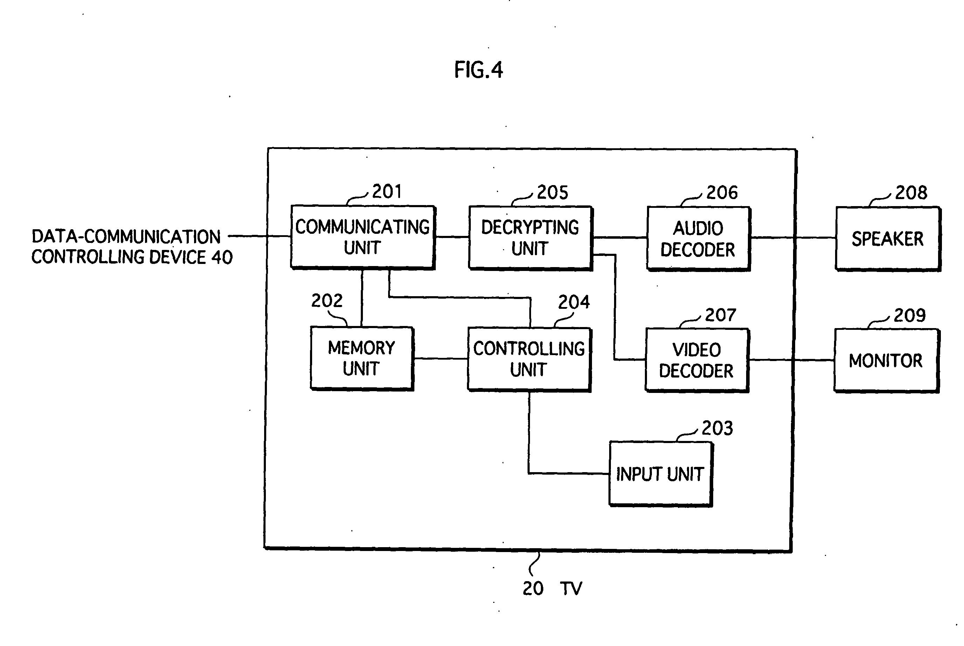

FIG. 4 is a block diagram showing the construction of the TV 20. As shown in the figure, the TV 20 is composed of a communicating unit 201, a memory unit 202, an input unit 203, a controlling unit 204, a decrypting unit 205, an audio decoder 206, a video decoder 207, a speaker 208, and a monitor 209.

### (1) Communicating Unit 201

The communicating unit 201 is a LAN-connected unit including an IEEE1394 connector and the like.

When the communicating unit 201 is newly connected to the home network by establishing connection to the data-communication controlling unit 40 via a LAN cable, the communicating unit 201 reads a device ID "IDA" and a certificate "CIDA" stored in the memory unit 202, and transmits the read device ID "IDA" and certificate "CIDA" to the data-communication controlling device 40. This processing is executed only when the TV 20 establishes connection to the data-communication controlling device 40 for the first time.

The communicating unit 201 receives a network address "IPA" from the data-communication controlling device 40, and stores the received network address "IPA" into the memory unit 202. The network address "IPA" is specifically an IP address.

The communicating unit 201 receives a content request and the network address "IPA" from the controlling unit 204, and transmits the received content request and network address "IPA" to the data-communication controlling device 40.

Also, the communicating unit 201 receives packets of encrypted content, and outputs the packets of encrypted content to the decrypting unit 205.

### (2) Memory Unit 202

The memory unit 202 is connected to the communicating unit 201. In the memory unit 202, the network address "IPA", the device ID "IDA", and the certificate "CIDA" are stored. As described above, the network address "IPA" is an IP address that is transmitted from the data-communication controlling device 40 when the TV 20 establishes connection to the data-communication controlling device 40. The device ID "IDA" is composed of a MAC address assigned to a NIC at the time of manufacture, and category information indicating a category of the device. The MAC address includes a manufacturer code unique to the NIC, a product number, and the like. The category information indicating a category of the device can be used to determine a level of the copyright protection function of the device. To be specific, the category information included in the device ID "IDA" is "2". The certificate "CIDA" has been issued by a certification authority and is used to authenticate the device ID "IDA".

It should be noted here that the device ID "IDA" and the certificate "CIDA" are stored at an OS level or a BIOS level to prevent them from being tampered with by the user.

### (3) Input Unit 203

The input unit 203 is specifically a user interface including a button and the like. Upon receipt of a user operation of the button or the like, the input unit 203 generates an input signal corresponding to the operation, and outputs the generated input signal to the controlling unit 204.

When the user operation indicates a request for playing back content, the input unit 203 generates, as the input signal, a content request including a content ID, and outputs the generated content request to the controlling unit 204.

### (4) Controlling Unit 204

The controlling unit 204 includes a CPU, a ROM, a RAM, and the like. The controlling unit 204 controls the entire TV 20 by its CPU executing a computer program stored in its ROM.

The controlling unit 204 receives an input signal from the input unit 203, and executes processing suitable for the received input signal. Upon receipt of a content request including a content ID as an input signal from the input unit 203, the controlling unit 204 reads the network address "IPA" stored in the memory unit 202, and transmits the read network address "IPA" and the content request, to the data-communication controlling device 40 via the communicating unit 201.

### (5) Decrypting Unit 205

The decrypting unit 205 includes a CPU, a ROM, a RAM, and the like, and internally stores a device key "KA".

The decrypting unit 205 receives encrypted content from the communicating unit 201, and decrypts the encrypted content in the following way, so as to generate content.

The decrypting unit 205 first refers to the "data size of header information" included in header information of the encrypted content, to detect a start position of the encrypted content information. The decrypting unit 205 then starts decrypting, from the detected start position, the encrypted content information using the device key "KA" according to the decryption algorithm "D2", so as to generate content information. The decrypting unit 205 continues the decryption process of the encrypted content information until detecting the end code. It should be noted here that an algorithm designed to decrypt data that has been encrypted according to the encryption algorithm "E2" is employed as the decryption algorithm "D2". To be specific, the DES is employed as the decryption algorithm "D2".

The decrypting unit 205 demultiplexes the content information into an audio stream and a video stream, and outputs the audio stream to the audio decoder 206 and the video stream to the video decoder 207.

### (6) Audio Decoder 206

The audio decoder 206 receives an audio stream from the decrypting unit 205, expands the received audio stream to an audio signal, and outputs the audio signal to the speaker 208.

### (7) Video Decoder 207

The video decoder 207 receives a video stream from the decrypting unit 205, expands the received video stream to a video signal, and outputs the video signal to the monitor 209.

### 3. PC 30

The PC 30 is a personal computer system that is composed of a microprocessor, a ROM, a RAM, a hard disk unit, a display unit, a keyboard, a mouse, a LAN-connected unit, and the like.

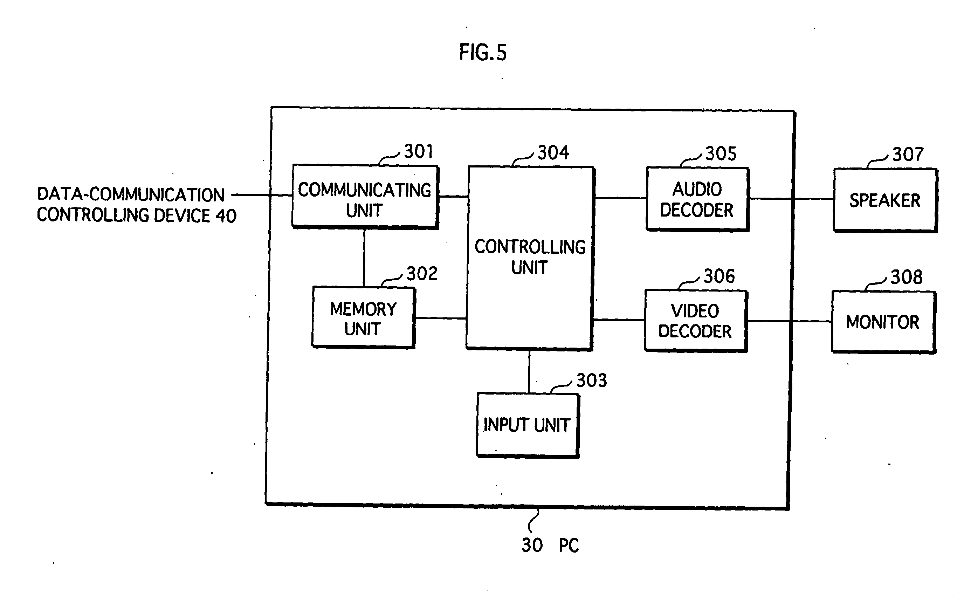

FIG. 5 is a block diagram showing the construction of the PC 30. As shown in the figure, the PC 30 is composed of a communicating unit 301, a memory unit 302, an input unit 303, a controlling unit 304, an audio decoder 305, a video decoder 306, a speaker 307, and a monitor 308.

### (1) Communicating Unit 301

The communicating unit 301 is a LAN-connected unit including an IEEE1394 connector and the like.

When the communicating unit 301 is newly connected to the home network by establishing connection to the data-communication controlling unit 40 via a LAN cable, the communicating unit 301 reads a device ID "IDB" and a certificate "CIDB" stored in the memory unit 302, and transmits the read device ID "IDB" and the certificate "CIDB" to the data-communication controlling device 40. This processing is executed only when the PC 30 establishes connection to the data-communication controlling device 40 for the first time.

The communicating unit 301 receives a network address "IPB" from the data-communication controlling device 40, and stores the received network address "IPB" into the memory unit 302. The network address "IPB" is specifically an IP address.

The communicating unit 301 receives a content request and the network address "IPB" from the controlling unit 304, and transmits the received content request and network address "IPB" to the data-communication controlling device 40.

Also, the communicating unit 301 receives packets of encrypted content from the data-communication controlling device 40, and outputs the packets of encrypted content to the controlling unit 304.

### (2) Memory Unit 302

The memory unit 302 is connected to the communicating unit 301. In the memory unit 302, the network address "IPB", the device ID "IDB", and the certificate "CIDB" are stored. As described above, the network address "IPB" is an IP address that is transmitted from the data-communication controlling device 40 when the PC 30 establishes connection to the data-communication controlling device 40. The device ID "IDB" is composed of a MAC address assigned to a NIC at the time of manufacture, and category information indicating a category of the device. The MAC address includes a manufacturer code unique to the NIC, a product number, and the like. The category information indicating a category of the device can be used to determine a level of the copyright protection function of the device. To be specific, the category information included in the device ID "IDB" is "1". The certificate "CIDB" has been issued by a certification authority and is used to authenticate the device ID "IDB".

It should be noted here that the device ID "IDB" and the certificate "CIDB" are stored at an OS level or a BIOS level to prevent them from being tampered with by the user.

### (3) Input Unit 303

The input unit 303 is specifically a user interface including a keyboard, a mouse, and the like. Upon receipt of a user operation of the keyboard, mouse, or the like, the input unit 303 generates an input signal corresponding to the operation, and outputs the generated input signal to the controlling unit 304.

When the user operation indicates a request for playing back content, the input unit 303 generates, as the input signal, a content request including a content ID, and outputs the generated content request to the controlling unit 304.

### (4) Controlling Unit 304

The controlling unit 304 includes a CPU, a ROM, a RAM, an HDD, and the like. The controlling unit 304 controls the entire PC 30 by its CPU executing a computer program stored in its ROM or HDD.

The controlling unit 304 receives an input signal from the input unit 303, and executes processing suitable for the received input signal. Upon receipt of a content request including a content ID as an input signal from the input unit 303, the controlling unit 304 reads the network address "IPB" stored in the memory unit 302, and transmits the read network address "IPB" and the content request, to the data-communication controlling device 40 via the communicating unit 301.

Also, the controlling unit 304 internally stores a device key "KB". The device key "KB" is a decryption key to be used to decrypt encrypted content when the PC 30 receives the encrypted content from the data-communication controlling device 40.

Upon receipt of encrypted content including encrypted content information that has been encrypted using the device key "KB" from the data-communication controlling device 40, the controlling unit 304 decrypts the encrypted content in the following way, so as to generate content.

The controlling unit 304 first refers to the "data size of header information" included in header information of the encrypted content, to detect a start position of the encrypted content information. The controlling unit 304 then starts decrypting, from the detected start position, the encrypted content information using the device key "KB" as a decryption key, according to the decryption algorithm "D2", so as to generate content information. The controlling unit 304 continues the decryption process of the encrypted content information until detecting the end code. The controlling unit 304 demultiplexes the content information, into an audio stream and a video stream, and outputs the audio stream to the audio decoder 305 and the video stream to the video decoder 306.

### (5) Audio Decoder 305

The audio decoder 305 receives an audio stream from the controlling unit 304, expands the received audio stream to an audio signal, and outputs the audio signal to the speaker 307.

### (6) Video Decoder 306

The video decoder 306 receives a video stream from the controlling unit 304, expands the received video stream to a video signal, and outputs the video signal to the monitor 308.

### 4. Data-Communication Controlling Device 40

The data-communication controlling device 40 routes content from the broadcast receiving device 10 to the TV 20 or to the PC 30. Also, the data-communication controlling device 40 is connected to the table updating server 50 via the Internet 70. The data-communication controlling device 40, being connected at a juncture of the home network and another network external to the home network, functions as a secure router or a gateway for controlling transmission of content from the home network to the external network. The data-communication controlling device 40 receives an instruction from the table updating server 50, and updates judgment tables internally stored therein.

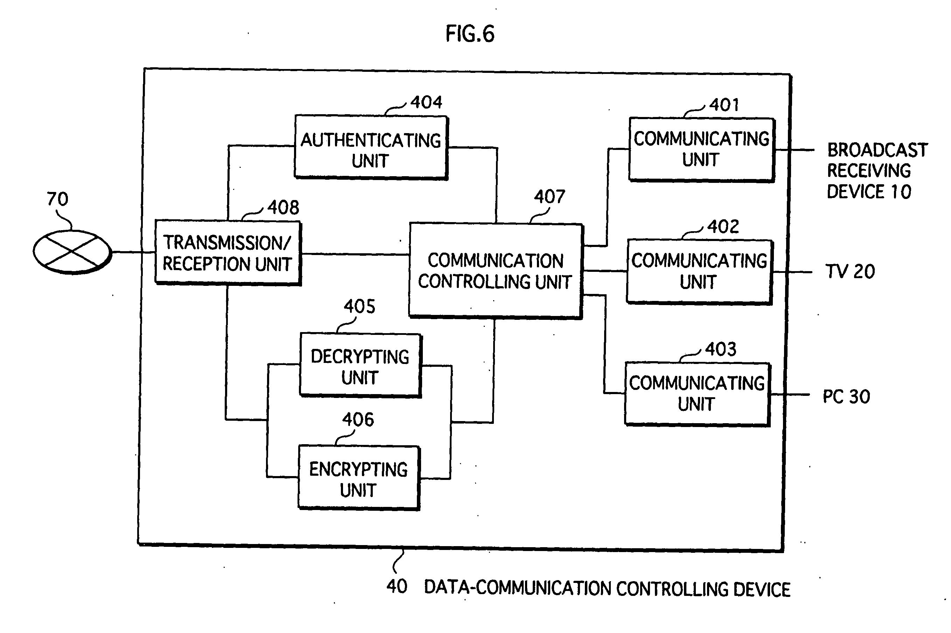

FIG. 6 is a block diagram showing the construction of the data-communication controlling device 40. As shown in the figure, the data-communication controlling device 40 is composed of communicating units 401, 402, and 403, an authenticating unit 404, a decrypting unit 405, an encrypting unit 406, a communication controlling unit 407, and a transmission/reception unit 408.

### (1) Communicating Units 401, 402, and 403

The communicating unit 401 is specifically a LAN-connected unit including an IEEE1394 connector and the like, and is connected to the broadcast receiving device 10 via a LAN cable. When network connection to the broadcast receiving device 10 is established, the communicating unit 401 receives the device ID "IDC" and the certificate "CIDC" from the broadcast receiving device 10, and outputs the received device ID "IDC" and certificate "CIDC" to the communication controlling unit 407 . Also, the communicating unit 401 transmits the network address "IPC" outputted from the communication controlling unit 407 to the broadcast receiving device 10. Also, the communicating unit 401 receives a content request and a network address transmitted from the TV 20 or the PC 30, via the communication controlling unit 407, and transmits the received content request and network address to the broadcast receiving device 10.

The communicating unit 402 has the same construction and function as the communicating unit 401, and is connected to the TV 20 via a LAN cable. When network connection to the TV 20 is established, the communicating unit 402 receives the device ID "IDA" and the certificate "CIDA" from the TV 20, and transmits the received device ID "IDA" and certificate "CIDA" to the communication controlling unit 407. Also, the communicating unit 402 transmits the network address "IPA" outputted from the communication controlling unit 407, to the TV 20 . Also, the communicating unit 402 receives a content request and the network address "IPA" from the TV 20, and transmits the received content request and network address "IPA" to the communicating unit 401 via the communication controlling unit 407.

Also, the communicating unit 402 divides encrypted content outputted from the communication controlling unit 407 into packets, and transmits the packets one after another to the TV 20.

The communicating unit 403 has the same construction and function as the communicating units 401 and 402, and is connected to the PC 30 via a LAN cable. When network connection to the PC 30 is established, the communicating unit 403 receives the device ID "IDB" and the certificate "CIDB" from the PC 30, and outputs the received device ID "IDB" and certificate "CIDB" to the communication controlling unit 407. Also, the communicating unit 403 transmits the network address "IPB" outputted from the communication controlling unit 407, to the PC 30 . Also, the communicating unit 403 receives a content request and the network address "IPB" from the PC 30, and transmits the received content request and network address "IPB" to the communicating unit 401 via the communication controlling unit 407. Also, the communicating unit 403 divides encrypted content outputted from the communication controlling unit 407 into packets, and transmits the packets one after another to the PC 30.

### (2) Authenticating Unit 404

The authenticating unit 404 specifically includes a CPU, a ROM, a RAM, and the like. The authenticating unit 404 receives a device ID of a device and its certificate from the communication controlling unit 407.

The device ID is composed of a MAC address assigned to a NIC at the time of manufacture, and category information indicating a category of the device. The MAC address includes a manufacturer code unique to the NIC, a product number, and the like. The category information indicating a category of the device can be used to determine a level of the copyright protection function of the device. To be specific, the category information is either "1" meaning that a copyright protection level is low, or "2" meaning that a copyright protection level is high. As specific examples, the category information included in the device ID of the broadcast receiving device 10 is "2", the category information included in the device ID of the TV 20 is "2" , and the category information included in the device ID of the PC 30 is "1".

The certificate has been issued by a certification authority, and is composed of a device ID, a NIC manufacturer, a certification authority name, and a serial number, each of which is digitally signed by the certification authority.

The authenticating unit 404 receives the device ID "IDC" and the certificate "CIDC" transmitted from the broadcast receiving device 10 via the communicating unit 401 and the communication controlling unit 407. The authenticating unit 404 authenticates the device ID "IDC" using the certificate "CIDC". When the authentication is successful, the authenticating unit 404 outputs the device ID "IDC" together with a signal indicating the successful authentication of the device ID "IDC", to the communication controlling unit 407.

The authenticating unit 404 receives the device ID "IDA" and the certificate "CIDA" transmitted from the TV 20, via the communicating unit 402 and the communication controlling unit 407. The authenticating unit 404 authenticates the device "IDA" using the certificate "CIDA". When the authentication is successful, the authenticating unit 404 outputs the device ID "IDA" together with a signal indicating the successful authentication of the device ID "IDA", to the communication controlling unit 407.

The authenticating unit 404 receives the device ID "IDB" and the certificate "CIDB" transmitted from the PC 30, via the communicating unit 403 and the communication controlling unit 407. The authenticating unit 404 authenticates the device "IDB" using the certificate "CIDB". When the authentication is successful, the authenticating unit 404 outputs the device ID "IDB" together with a signal indicating the successful authentication of the device ID "IDB", to the communication controlling unit 407.

When the authentication is unsuccessful, revealing that a device ID received from the communication controlling unit 407 is an ID of an unauthorized device, the authenticating unit 404 revokes the device ID and its certificate.

### (3) Decrypting Unit 405

The decrypting unit 405 includes a CPU, a ROM, a RAM, and the like, and internally stores a content key "KC" . The content key "KC" is recorded in advance on the ROM, and this key is shared with the broadcast receiving device 10.

The decrypting unit 405 receives encrypted content and a transmission target device ID from the broadcast receiving device 10 via the communicating unit 401 and the communication controlling unit 407. The decrypting unit 405 refers to the "data size of header information" included in header information of the encrypted content, to detect a start position of the encrypted content information. The decrypting unit 405 then starts decrypting, from the detected start position, the encrypted content information using the content key "KC" as a decryption key, according to the decryption algorithm "D1''. The decrypting unit 405 continues the decryption process of the encrypted content information until detecting the end code. The decrypting unit 405 then outputs the decrypted content and the transmission target device ID to the encrypting unit 406.

### (4) Encrypting Unit 406

The encrypting unit 406 includes a CPU, a ROM, a RAM, and the like, and internally stores a device key "KA" and a device key "KB". The device key "KA" is an encryption key to be used to encrypt content when the content is to be transmitted to the TV 20 . The device key "KB" is an encryption key to be used to encrypt content when the content is to be transmitted to the PC 30.

The encrypting unit 406 stores the device key "KA" and the device ID "IDA" of the TV 20 in association with each other, and the device key "KB" and the device ID "IDB" of the PC 30 in association with each other.

The encrypting unit 406 receives content and a transmission target device ID from the decrypting unit 405, and checks the received transmission target device ID. When the transmission target device ID is "IDA", the encrypting unit 406 encrypts content information included in the received content using the device key "KA" as an encryption key, according to the encryption algorithm "E2", so as to generate encrypted content information. The encrypting unit 406 outputs encrypted content that is composed of header information, the encrypted content information, and end code, together with the transmission target device ID "IDA", to the communication controlling unit 407.

When the transmission target device ID is "IDB", the encrypting unit 406 encrypts content information included in the received content using the device key "KB" as an encryption key, according to the encryption algorithm "E2", so as to generate encrypted content information. The encrypting unit 406 outputs encrypted content that is composed of header information, the encrypted content information, and end code, together with the transmission target device ID "IDB", to the communication controlling unit 407.

### (5) Communication Controlling Unit 407

The communication controlling unit 407 includes a CPU, a ROM, a RAM, and the like. The communication controlling unit 407 controls the entire data-communication controlling device 40 by its CPU executing a computer program stored in its ROM.

### (Generation of Address Conversion Table)

Upon receipt of a device ID and a certificate from the communicating units 401, 402, or 403, the communication controlling unit 407 outputs the device ID and the certificate to the authenticating unit 404.

Upon receipt of a signal indicating that the certificate has been successfully authenticated together with the device ID "IDC" from the authenticating unit 404, the communication controlling unit 407 assigns the network ID "IPC" to the broadcast receiving device 10 identified by the device ID "IDC". The communication controlling unit 407 stores the network ID "IPC" and the device ID "IDC" in association with each other, into the address conversion table. In the same manner, upon receipt of a signal indicating that the certificate has been successfully authenticated together with the device ID "IDA" from the authenticating unit 404, the communication controlling unit 407 assigns the network ID "IPA" to the TV 20 identified by the device ID "IDA". The communication controlling unit 407 stores the network ID "IPA" and the device ID "IDA" in association with each other, into the address conversion table. Further in the same manner, upon receipt of a signal indicating that the certificate has been successfully authenticated together with the device ID "IDB" from the authenticating unit 404, the communication controlling unit 407 assigns the network ID "IPB" to the PC 30 identified by the device ID "IDB". The communication controlling unit 407 stores the network ID "IPB" and the device ID "IDB" in association with each other, into the address conversion table.

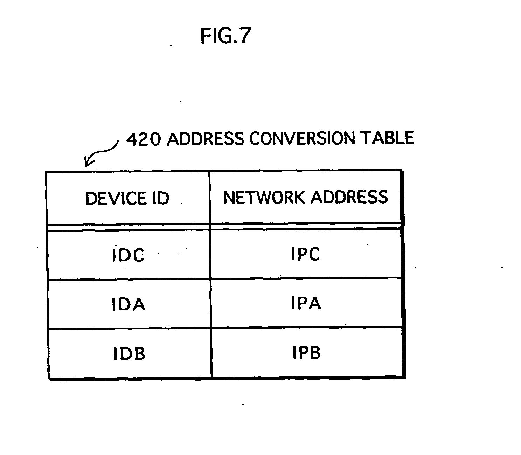

FIG. 7 shows an address conversion table 420 generated in the above-described way . Upon receipt of a content request from the TV 20 or the PC 30, the communication controlling unit 407 judges whether the requested content is permitted to be transmitted, using this address conversion table 420 and a judgment table that is described later.

It should be noted here that the network addresses "IPA", "IPB", and "IPC" are specifically IP addresses. One example method for assigning IP addresses is DHCP (Dynamic Host Configuration Protocol), which is described in detail in Andrew S. Tanebaum's *"Computer Networks 3^{rd} Edition"* translated into Japanese by Tadanori Mizuno et al., published by PEARSON EDUCATION.

The communication controlling unit 407 executes the above-described processing when another device is newly connected to a communicating unit of the data-communication controlling device 40.

### (Generation of Judgment Table)

The communication controlling unit 407 internally prestores judgment tables "A" and "B", which are blank with no data being written therein. The communication controlling unit 407 writes a device ID into the judgment tables "A" and/or "B", every time when a device establishes connection to the data-communication controlling device 40 via a LAN cable.

Upon receipt of a signal indicating that the certificate has been successfully authenticated, together with the device ID "IDC" from the authenticating unit 404, the communication controlling unit 407 reads category information included in the device ID "IDC". When the category information is "1", the communication controlling unit 407 writes the device ID "IDC" into the judgment table "A". When the category information is "2", the communication controlling unit 407 writes the device ID "IDC" into both the judgment tables "A" and "B".

In the same manner, upon receipt of a signal indicating that the certificate has been successfully authenticated, together with the device ID "IDA" from the authenticating unit 404, the communication controlling unit 407 reads category information included in the device ID "IDA". When the category information is "1", the communication controlling unit 407 writes the device ID "IDA" into the judgment table "A" . When the category information is "2" , the communication controlling unit 407 writes the device ID "IDA" into both the judgment tables "A" and "B" . Further in the same manner, upon receipt of a signal indicating that the certificate has been successfully authenticated, together with the device ID "IDB" from the authenticating unit 404, the communication controlling unit 407 reads category information included in the device ID "IDB". When the category information is "1", the communication controlling unit 407 writes the device ID "IDB" into the judgment table "A". When the category information is "2", the communication controlling unit 407 writes the device ID "IDB" into both the judgment tables "A" and "B".

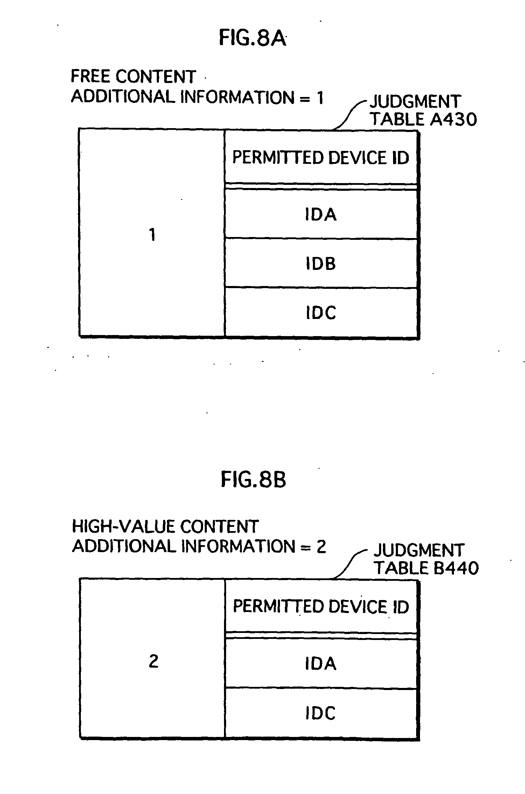

The judgment table "A" generated in the above-described way is the judgment table A430 shown in FIG. 8A. As shown in the figure, the judgment table A430 is composed of additional information "1" and devices IDs of devices to which content having the additional information "1" is permitted to be transmitted. According to this table, content having the additional information "1" is permitted to be transmitted to devices having the device IDs "IDA", "IDB", and "IDC". In the same manner, the judgment table "B" generated in the above-described way is the judgment table B440 shown in FIG. 8B . As shown in the figure, the judgment table B440 is composed of additional information "2" and devices IDs of devices to which content having the additional information "2" is permitted to be transmitted. According to this table, content having the additional information "2" is permitted to be transmitted to devices having the device IDs "IDA" and "IDC".

### (Content Request Transfer)

Upon receipt of a content request and the network address "IPA" from the TV 20 via the communicating unit 402, the communication controlling unit 407 transmits the received content request and network address "IPA" to the broadcast receiving device 10 via the communicating unit 401. Also, upon receipt of a content request and the network address "IPB" from the PC 30 via the communicating unit 403, the communication controlling unit 407 transmits the received content request and network address "IPB" to the broadcast receiving device 10 via the communicating unit 401.

### (Judgment)

Upon receipt of encrypted content and a transmission target address from the broadcast receiving device 10 via the communicating unit 401, the communication controlling unit 407 judges whether the encrypted content is permitted to be transmitted to a device having the transmission target address in the following way.

The communication controlling unit 407 reads the internally-stored address conversion table, and reads a device ID corresponding to the transmission target address received from the broadcast receiving device 10. The communication controlling unit 407 reads additional information included in header information of the encrypted content received from the broadcast receiving device 10.

When the additional information is "1", the communication controlling unit 407 reads the internally-stored judgment table A430. The communication controlling unit 407 judges whether the device ID is included in the judgment table A430. When judging that the device ID is included in the judgment table A430, the communication controlling unit 407 determines that the encrypted content is permitted to be transmitted to the device identified by the device ID, and transmits the encrypted content and the device ID to the decrypting unit 405. When judging that the device ID is not included in the judgment table A430, the communication controlling unit 407 determines that the encrypted content is not permitted to be transmitted to the device identified by the device ID, and abandons the encrypted content and the transmission target address.

When the additional information is "2", the communication controlling unit 407 reads the internally-stored judgment table B440. The communication controlling unit 407 judges whether the device ID is included in the judgment table B440. When judging that the device ID is included in the judgment table B440, the communication controlling unit 407 determines that the encrypted content is permitted to be transmitted to the device identified by the device ID, and transmits the encrypted content and the device ID to the decrypting unit 405. When judging that the device ID is not included in the judgment table B440, the communication controlling unit 407 determines that the encrypted content is not permitted to be transmitted to the device identified by the device ID, and abandons the encrypted content and the transmission target address.

When the additional information is "0", the communication controlling unit 407 does not refer to any judgment tables, and directly transmits the encrypted content information and device ID to the decrypting unit 405.

The following gives one specific example case where the communication controlling unit 407 receives encrypted content generated by encrypting the content 150 shown in FIG. 3 using the content key "KC" as an encryption key, together with the transmission target address "IPA" from the broadcast receiving device 10 via the communicating unit 401. The communication controlling unit 407 reads the internally-stored address conversion table 420, and determines that a device ID corresponding to the transmission target address "IPA" is "IDA". Following this, the communication controlling unit 407 reads additional information included in header information of the encrypted content, and determines that the additional information is "2". The communication controlling unit 407 then reads the judgment table B440 corresponding to the additional information "2", and determines that the device ID "IDA" is included in the judgment table B440. Finally, the communication controlling unit 407 determines that the content 150 is permitted to be transmitted to the device identified by the device ID "IDA".

The following gives another specific example case where the communication controlling unit 407 receives encrypted content generated by encrypting the content 150 shown in FIG. 3 using the content key "KC" as an encryption key, together with the transmission target address "IPB" from the broadcast receiving device 10 via the communicating unit 401. The communication controlling unit 407 reads the internally-stored address conversion table 420, and determines that a device ID corresponding to the transmission target address "IPB" is "IDB". Following this, the communication controlling unit 407 reads additional information included in header information of the encrypted content, and determines that the additional information is "2". The communication controlling unit 407 then reads the judgment table B440 corresponding to the additional information "2", and determines that the device ID "IDB" is not included in the judgment table B440. Finally, the communication controlling unit 407 determines that the content 150 is not permitted to be transmitted to the device identified by the device ID "IDB".

It should be noted here that in the above j judgment process, the communication controlling unit 407 accumulates packets received from the broadcast receiving device 10 via the communicating unit 401 until being able to check additional information included in header information of the encrypted content. Upon completion of checking the additional information, the communication controlling unit 407 stops accumulating packets, and either outputs the accumulated packets one after another to the decrypting unit 405, or abandons the accumulated packets.

### (Transmission of Content)

The communication controlling unit 407 receives encrypted content and a transmission target device ID from the encrypting unit 406. The communication controlling unit 407 selects a communicating unit to which a device identified by the transmission target device ID is connected, and transmits the encrypted content to the device identified by the transmission target device ID, via the selected communicating unit.

### (Update of Judgment Table)

The communication controlling unit 407 is connected to the table updating server 50 via the transmission/reception unit 408 and the Internet 70. Upon receipt of an instruction to update an internally-stored judgment table from the table updating server 50 via the Internet 70 and the transmission/reception unit 408, the communication controlling unit 407 updates the judgment table by, for example, adding or deleting a device ID to or from the judgment table.

### (6) Transmission/Reception Unit 408

The transmission/reception unit 408 is connected to the table updating server 50 via the Internet 70. The transmission/reception unit 408 receives an instruction to update a table from the table updating server 50, and outputs the instruction to the communication controlling unit 407.

### 5. Table Updating Server 50

The table updating server 50 is a device owned by a manger of content distributed in the content distributing system 1. The table updating server 50 is specifically a computer system that is composed of a CPU, a ROM, a RAM, a hard disk unit, an Internet-connected unit, and the like. The table updating server 50 is connected to the data-communication controlling device 40 that is placed within the home of the content user via the Internet 70.

The table updating server 50 transmits an instruction to update a judgment table stored internally by the communication controlling unit 407 of the data-communication controlling device 40, to the communication controlling unit 407 via the Internet 70 and the transmission/reception unit 408. The judgment table updating process is described in detail later.

### 6. Broadcast Device 60

The broadcast device 60 broadcasts digitized content on a digital broadcast wave, via the broadcast satellite 80. The content is specifically constructed by multiplexing video data and audio data together.

### <Operation>

The following describes the operation of the content distributing system 1, with reference to flowcharts.

### 1. Device ID Registration Process

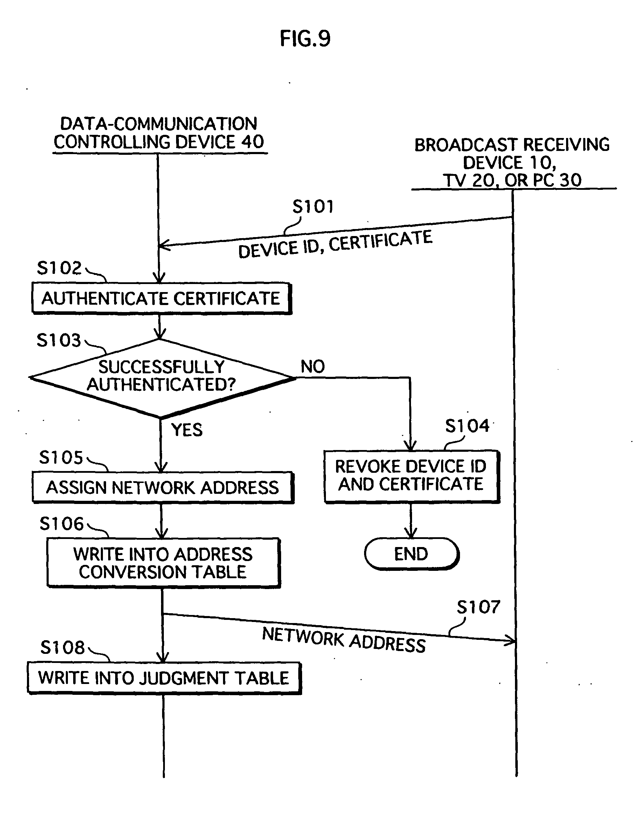

FIG. 9 is a flowchart showing the device ID registration process executed when the broadcast receiving device 10, the TV 20, or the PC 30 is newly connected to the home network by establishing connection for the first time to the data-communication controlling device 40.

The broadcast receiving device 10, the TV 20, or the PC 30 reads its internally-stored device ID and certificate, and transmits the read device ID and certificate to the communication controlling device 40 via its communicating unit. The data-communication controlling device 40 receives the device ID and certificate via its communication unit (step 5101). Here, the device ID is "IDC" and the certificate is "CIDC" for the broadcast receiving device 10, "IDA" and "CIDA" for the TV 20, and "IDB" and "CIDB" for the PC 30.

The data-communication controlling device 40 authenticates the received certificate (step S102). When the authentication is unsuccessful ("NO" in step S103), the data-communication controlling device 40 revokes the received device ID and certificate, and the process ends. When the authentication is successful ("YES" in step S103), the data-communication controlling device 40 assigns a network address (step S105). The data-communication controlling device 40 writes the assigned network address and the device ID in association with each other, into the address conversion table (step 5106). The data-communication controlling device 40 transmits the assigned network address to the broadcast receiving device 10, the TV 20, or the PC 30. The broadcast receiving device 10, the TV 20, or the PC 30 receives the assigned network address (step S107).

Following this, the data-communication controlling device 40 checks category information included in the received device ID, and writes the device ID into the judgment table(s) corresponding to the category information (step S108).

### 2. Content Distribution Process

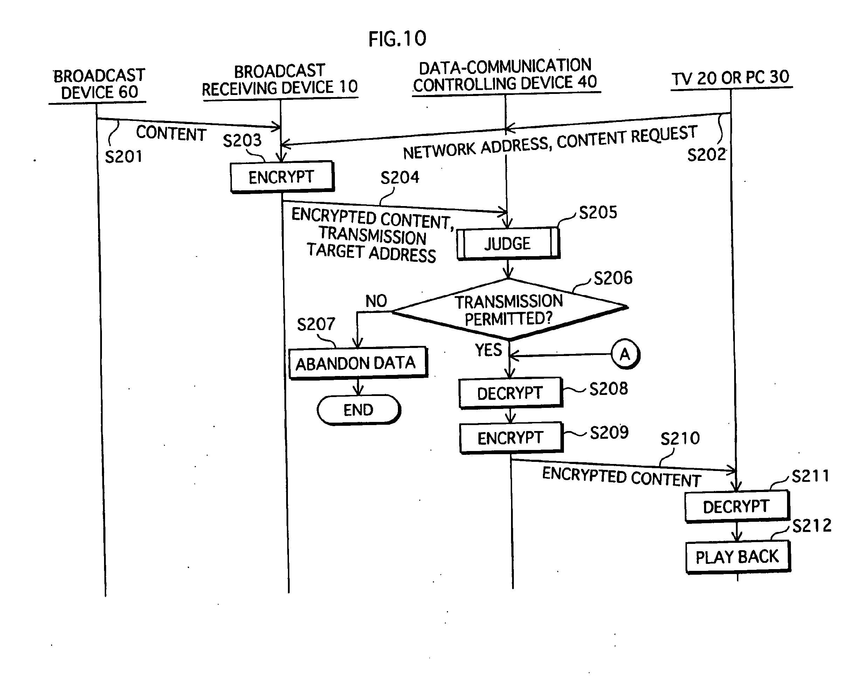

FIG. 10 is a flowchart showing the overall operation of the content distributing system 1 in the content distribution process.

The broadcast device 60 broadcasts digitized content on a digital broadcast wave, via the broadcast satellite 80. The broadcast receiving device 10 receives the content via the antenna (step S201), and stores the content into the content storing unit 103.

The TV 20 or the PC 30 transmits a content request including a content ID, and its internally-stored network address, to the broadcast receiving device 10 via the data-communication controlling device 40. The broadcast receiving device 10 receives the content request and network address (step S202). Here, the network address is "IPA" for the TV 20, and "IPB" for the PC 30.

The broadcast receiving device 10 reads content identified by the content ID included in the content request, from the content storing unit 103, and encrypts the read content using the content key "KC" (step S203). The broadcast receiving device 10 transmits the encrypted content and the transmission target address, to the data-communication controlling device 40. The data-communication controlling device 40 receives the encrypted content and the transmission target address (step S204).

The data-communication controlling device 40 judges whether the encrypted content is permitted to be transmitted to a device having the received transmission target address (step S205). When judging that the encrypted content is not permitted to be transmitted ("NO" in step S206), the data-communication controlling device 40 abandons the encrypted content and the transmission target address received from the broadcast receiving device 10 (step S207). When judging that the encrypted content is permitted to be transmitted ("YES" in step S206), the data-communication controlling device 40 decrypts the encrypted content using the content key "KC" (step S208). Following this, the data-communication controlling device 40 encrypts the content resulting from the decryption, using a device key shared with the device having the transmission target address, namely, the TV 20 or the PC 30 (step S209).

The data-communication controlling device 40 transmits the encrypted content resulting from the encryption using the device key, to the device having the transmission target address, namely, the TV 20 or the PC 30. The TV 20 or the PC 30 receives the encrypted content (step S210). The TV 20 or the PC 30 decrypts the encrypted content, using its internally-stored device key (step S211), and plays back the decrypted content (step S212).

### 3. Judgment Process

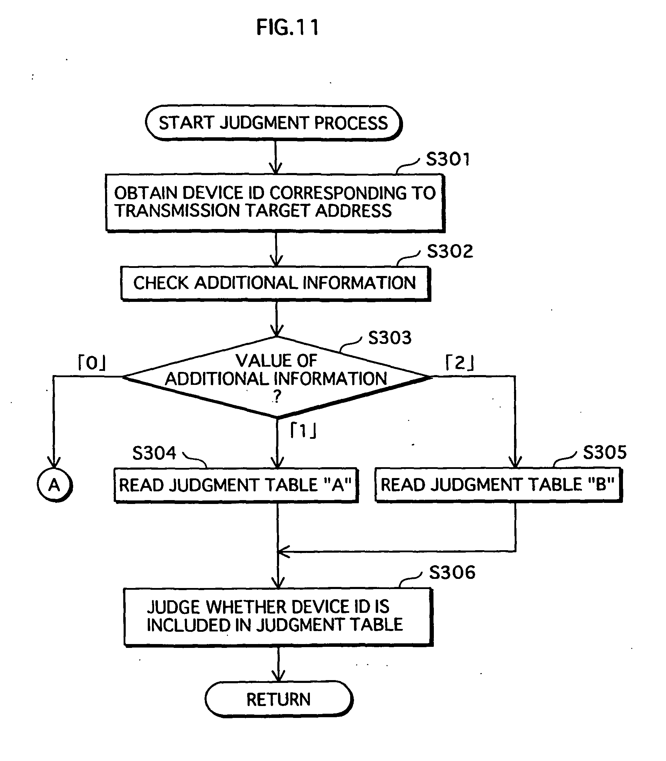

FIG. 11 is a flowchart showing the operation of the data-communication controlling device 40 in the judgment process for judging whether content is permitted to be transmitted. The flowchart gives a detailed description of step S205 in the flowchart shown in FIG. 10.

The communication controlling unit 407 of the data-communication controlling device 40 refers to its internally-stored address conversion table, and obtains a device ID corresponding to the transmission target address received from the broadcast receiving device 10 (step S301). Following this, the communication controlling unit 407 reads additional information from header information included in the encrypted content received from the broadcast receiving device 10, and checks the additional information (step S302).

When the additional information is "0" ("0" in step S303), the communication controlling unit 407 moves to step S208 in the flowchart shown in FIG. 10, and continues the subsequent processing. When the additional information is "1" ("1" in step S303), the communication controlling unit 407 reads the internally-stored judgment table "A" (step S304). When the additional information is "2" ("2" in step S303), the communication controlling unit 407 reads the internally-stored judgment table "B" (step S305). The communication controlling unit 407 judges whether the device ID obtained in step S301 is included in the read judgment table (step S306). The device ID being included in the judgment table means that the content is permitted to be transmitted, whereas the device ID not being included in the judgment table means that the content is not permitted to be transmitted.

Following this, the communication controlling unit 407 moves to step S206 in the flowchart shown in FIG. 10, and continues the subsequent processing.

### 4. Judgment Table Updating Process

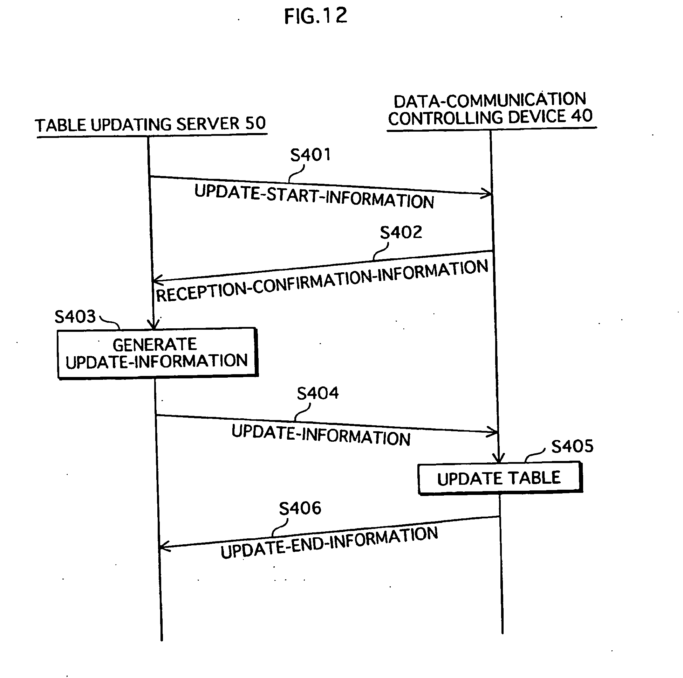

FIG. 12 is a flowchart showing the operation of the table updating server 50 and the data-communication controlling device 40 in the judgment table updating process.

The table updating server 50 transmits update-start-information "I_S" indicating that updating a table is to be started, to the data-communication controlling device 40. The data-communication controlling device 40 receives the update-start-information "I_S" (step S401). Following this, the data-communication controlling device 40 transmits reception-confirmation-information "I_R" indicating that the update-start-information "I_S" has been received, to the table updating server 50. The table updating server 50 receives the reception-confirmation-information "I_R" (step S402).

The table updating server 50 generates update-information (step S403), and transmits the generated update-information to the data-communication controlling device 40. The data-communication controlling device 40 receives the update-information (step S404). The data-communication controlling device 40 updates the judgment table, based upon the received update-information (step S405). Upon completion of updating the judgment table, the data-communication controlling device 40 transmits update-end-information "I_A" to the table updating server 50. The table updating server 50 receives the update-end-information "I_A" (step S406), and the process ends.

### <Second Embodiment>

The following describes a content distributing system 2 as a second embodiment of the present invention, with reference to the drawings.

### <Construction>

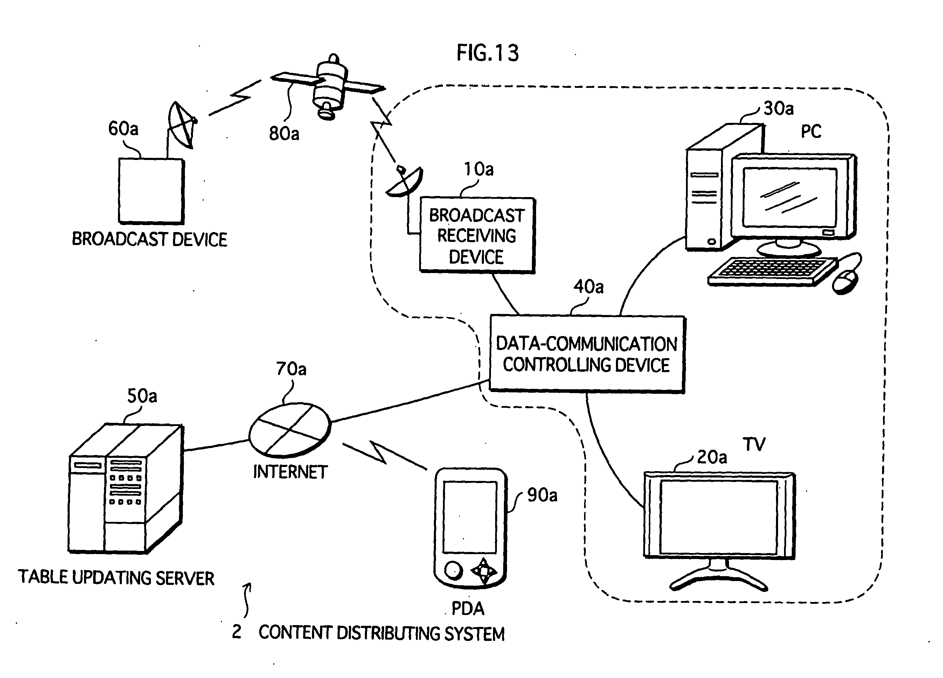

FIG. 13 shows the construction of the content distributing system 2. As shown in the figure, the content distributing system 2 is composed of a broadcast receiving device 10a, a TV (television) 20a, a PC (personal computer) 30a, a data-communication controlling device 40a, a table updating server 50a, a broadcast device 60a, and a PDA (personal digital assistance) 90a.

In FIG. 13, the broadcast receiving device 10a, the TV 20a, the PC 30a, and the data-communication controlling device 40a encircled by a broken line are devices placed in a home of the user who views and/or listens to content. The broadcast receiving device 10a, the TV 20a, and the PC 30a are each connected to the data-communication controlling device 40a via a LAN cable, and communicate with the data-communication controlling device 40a. The table updating server 50a and the broadcast device 60a are devices placed in a content provision center that provides content. The table updating server 50a is connected to the data-communication controlling device 40a via an Internet 70a. The broadcast device 60a broadcasts content via a broadcast satellite 80a.

The PDA 90a is a device owned by the user. Even outside the home of the user, the user can connect the PDA 90a to the Internet 70a using a wireless wave so as to connect the PDA 90a to the data-communication controlling device 40a via the Internet 70a. Hereafter, such a device may be referred to as a "remote device".

The following describes the content distributing system 2, focusing on the components different from the components of the content distributing system 1 relating to the first embodiment.

### 1. Data-Communication Controlling Device 40a

The data-communication controlling device 40a authenticates the broadcast receiving device 10a, the TV 20a, the PC 30a, and the PDA 90a when these devices establish connection to the data-communication controlling device 40a for the first time. The authentication method employed here is the same as the method described in the first embodiment, and the data-communication controlling device 40a uses a device ID and a certificate transmitted from each device, to authenticate each device. The data-communication controlling device 40a assigns a network address to a device that is successfully authenticated, and transmits the network address to the device. Also, the data-communication controlling device 40a distributes a group key "KG" to devices other than the PC 30a.

Here, the network address is the same as the network address described in the first embodiment. The group key "KG" is key data unique to the network. The data-communication controlling device 40a judges whether to distribute the group key "KG" to each device, according to category information included in a device ID of each device. In the present embodiment, the data-communication controlling device 40a provides such control not to transmit the group key "KG" to the PC 30a, but to transmit the group key "KG" to the broadcast receiving device 10a, the TV 20a, and the PDA 90a. However, the control provided by the data-communication controlling device 40a should not be limited to excluding the PC 30a, but should be such that the group key "KG" is not distributed to a device to which transmission of content is to be prohibited .

It should be noted here that the system construction may be such that the group key "KG" is held in advance by the data-communication controlling device 40a, or may be such that the group key "KG" is transmitted from the content provision center.

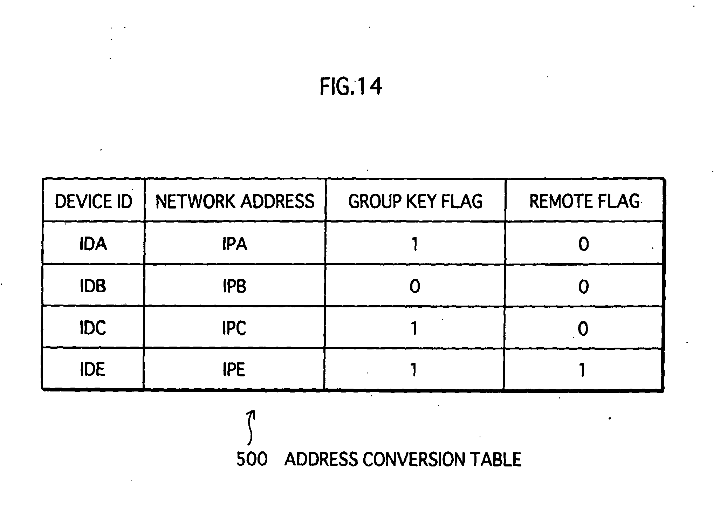

The data-communication controlling device 40a generates an address conversion table 500 shown in FIG. 14, along with each device establishing connection to the data-communication controlling device 40a. The address conversion table 500 includes, for each device connected, a device ID, a network address, a group key flag, and a remote flag. The device ID and the network address are the same as those described in the first embodiment. The group key flag is set at "0" or "1". The group key flag is set at 1, when the group key "KG" is to be distributed to the corresponding device, and is set at 0 when the group key "KG" is not to be distributed to the corresponding device. The remote flag is set at "0" or "1". The remote flag is set at 1 when the corresponding device is a remote device, and is set at 0 when the corresponding device is not a remote device.

Here, the data-communication controlling device 40a may be constructed to judge whether each device is a remote device using a device ID of the device, or using other methods . Also, the data-communication controlling device 40a may be constructed to register only a device to which it has transmitted the group key "KG", into the address conversion table.

Further, the data-communication controlling device 40a stores in advance the number of devices that can be registered in the table, and the number of group keys "KG" that can be transmitted. For example, assume that the number of devices that can be registered by the data-communication controlling device 40a and the number of group keys "KG" that can be distributed to be eight. Every time when the data-communication controlling device 40a transmits the group key "KG" to a certain device connected thereto after successfully authenticating the device, the data-communication controlling device 40a decrements the number of group keys "KG" that can be distributed. For example, assume here that the data-communication controlling device 40a distributes the group key "KG" to the broadcast receiving device 10a, the TV 20a, and the PDA 90a after successfully authenticating them. In this case, the number of distributable group keys stored in the data-communication controlling device 40a is five. Here, if a device that has once received the group key "KG", e.g., the PDA 90a, returns the group key "KG" to the data-communication controlling device 40a, the number of distributable group keys is incremented to six.

The data-communication controlling device 40a receives, from the broadcast receiving device 10a, encrypted content generated by encrypting content using the group key "KG", and transmits the encrypted content to a transmission target device. The device that has received the encrypted content decrypts the encrypted content using the group key "KG", and plays back the decrypted content.

Also, the data-communication controlling device 40a checks, at regular intervals, whether each device registered in the address conversion table 500 is in a communicable state. The data-communication controlling device 40a deletes a device that is not in a communicable state, from the address conversion table 500. The data-communication controlling device 40a transmits a new group key "KG1" to a device found in a communicable state.

As described above, the data-communication controlling device 40a sets a valid period for the group key "KG". Along with the regular checking of each device's communicable or incommunicable state, the data-communication controlling device 40a updates the group key "KG" to a new group key "KG", and distributes the new group key "KG" to each device found in a communicable state.

### <Operation>

The following describes the operation of the content distributing system 2.

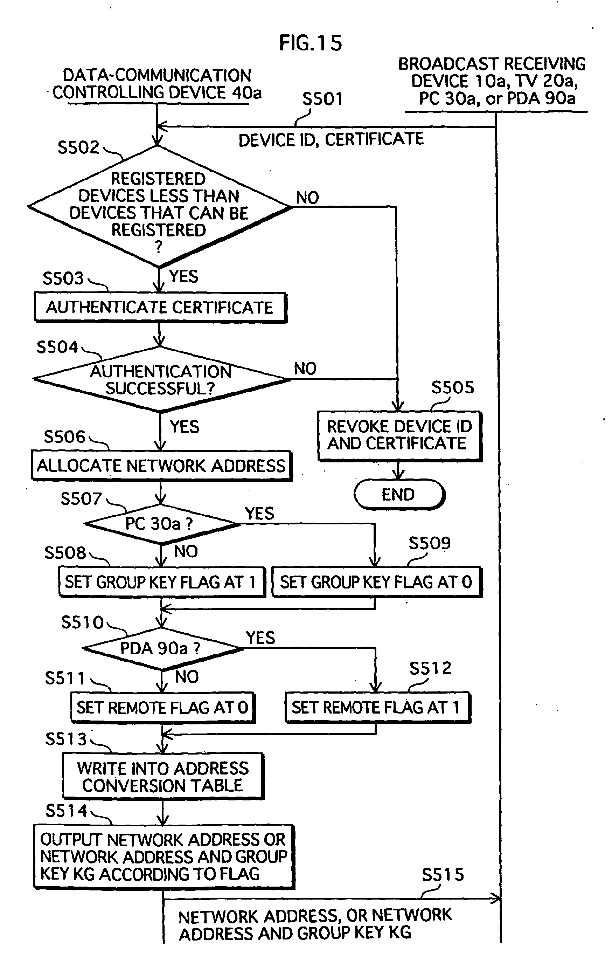

FIG. 15 is a flowchart showing a device ID registration process executed when the broadcast receiving device 10a, the TV 20a, the PC 30a, or the PDA is newly connected to the home network by establishing connection to the data-communication controlling unit 40a.

The broadcast receiving device 10a, the TV 20a, the PC 30a, or the PDA 90a reads its internally stored device ID and certificate, and transmits them to the data-communication controlling device 40a. The data-communication controlling device 40a receives the device ID and the certificate (step S501) . Here, the device ID of the broadcast receiving device 10a is "IDC", and its certificate is "CIDC". The device ID of the TV 20a is "IDA", and its certificate is "CIDA". The device ID of the PC 30a is "IDB", and its certificate is "CIDB". The device ID of the PDA 90a is "IDE", and its certificate is "CIDE".

The data-communication controlling device 40a checks the internally stored number of devices that can be registered, to see whether the number of registered devices is less than the number of devices that can be registered. When judging that the number of registered devices is not less than the number of devices that can be registered ("NO" in step S502), the data-communication controlling device 40a revokes the received device ID and certificate (step S505), and ends the process. When judging that the number of registered devices is less than the number of devices that can be registered ("YES" in step S502), the data-communication controlling device 40a authenticates the received certificate (step S503). When the authentication of the certificate is unsuccessful ( "NO" in step S504), the data-communication controlling device 40a revokes the received ID and certificate (step S505), and ends the process. When the authentication of the certificate is successful ("YES" in step S504), the data-communication controlling device 40a assigns a network address to the device (step S506).

Following this, the data-communication controlling device 40a judges whether the device connected thereto is the PC 30a using the received device ID. When judging that the device is the PC 30a ("YES" in step S507), the data-communication controlling device 40a sets the group key flag at 0 (step S509) . When judging that the device is not the PC 30a ("NO" in step S507), the data-communication controlling device 40a sets the group key flag at 1 (step S508).

Following this, the data-communication controlling device 40a judges whether the device connected thereto is the PDA 90a using the received device ID. When judging that the device is the PDA 90a ("YES" in step S510), the data-communication controlling device 40a sets the remote flag at 1 (step S512). When judging that the device is not the PDA 90a ("NO" in step S510), the data-communication controlling device 40a sets the remote flag at 0 (step S511).

The data-communication controlling device 40a then writes the assigned network address, the device ID, the set group key flag, and the set remote flag, in association with one another, into the address conversion table 500 (step S513). The data-communication controlling device 40a transmits the assigned network address to the device. Here, the data-communication controlling device 40a outputs the group key "KG" and the network address when the group key flag is set at 1, and outputs only the network address when the group key flag is set at 0 (step S514).

The broadcast receiving device 10a, the TV 20a, the PC 30a, or the PDA 90a receives only the network address or both the network address and the group key "KG" (step S515).

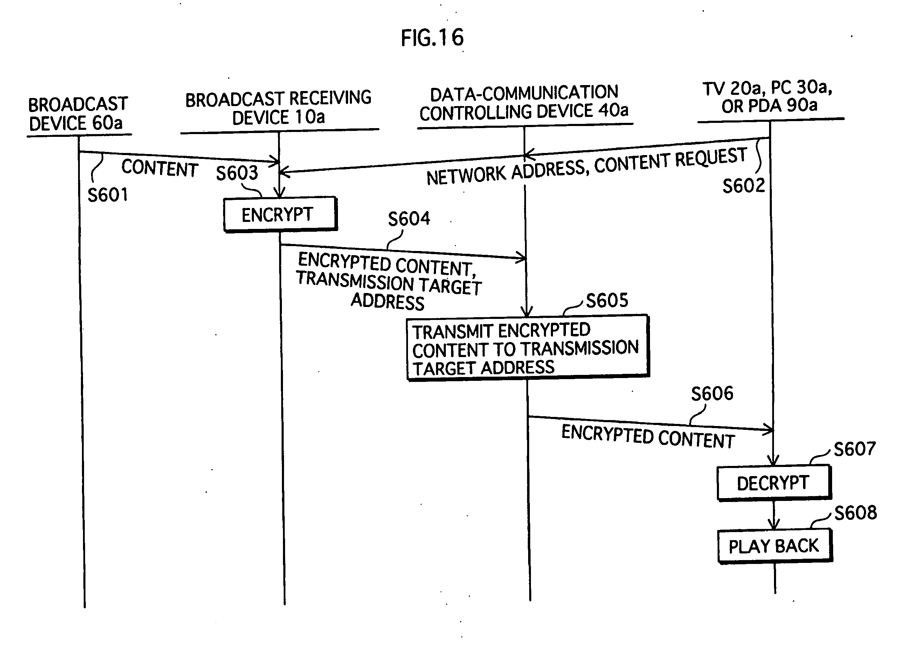

FIG. 16 is a flowchart showing the overall operation of the content distribution system 2 in the content distribution process.

The broadcast device 60a broadcasts digitized content on a digital broadcast wave, via the broadcast satellite 80. The broadcast receiving device 10a receives the content via an antenna (step S601), and stores the content.

The TV 20a, the PC 30a, or the PDA 90a transmits a content request including a content ID, and an internally stored network address, to the broadcast receiving device 10a via the data-commnication controlling device 40a. The broadcast receiving device 10a receives the content request and the network address (step S602). Here, the network address is "IPA" for the TV 20a, and "IPB" for the PC 30a, and "IDE" for the PDA 90a.

The broadcast receiving device 10a reads content having the content ID included in the content request, and encrypts the content using the group key "KG" (step S603). The broadcast receiving device 10a transmits the encrypted content and a transmission target address to the data-communication controlling device 40a. The data-communication controlling device 40a receives the encrypted content and the transmission target address (step S604).

The data-communication controlling device 40a transmits the encrypted content to a device having the transmission target address (step S605). The TV 20a, the PC 30a, or the PDA 90a receives the encrypted content (step S606). When internally storing the group key "KG", the TV 20a, the PC 30a, or the PDA 90a decrypts the encrypted content using the group key "KG" (step S607), and plays back the decrypted content (step S608).

### <Conclusions>

As described above, the present invention relates to a secure router or a home gateway that can prohibit transmission of high-value content to a PC, and also relates to a system including the secure router or the home gateway.

Each device has category information. At the time of establishing network connection, each device transmits its own category information and MAC address to the secure router. The secure router can identify, using this category information, the device to be a PC, a TV, a broadcast receiving device, an air conditioner, a DVD recorder, a refrigerator, or another device. The secure router stores value levels of content permitted to be transmitted according to category information. Therefore, the secure router can judge a value level of content that is permitted to be transmitted to each device, by checking category information transmitted from each device.

When a PC is newly connected to the secure router, the PC transmits its MAC address, and its category information indicating that the device connected is a "PC", to the secure router. The secure router can determine that the newly connected device is a "PC", by referring to the transmitted category information. Because high-value content is not permitted to be transmitted to a PC, the secure router does not write the transmitted MAC address into the high-value table that is provided for listing devices to which high-value content is permitted to be transmitted.

When a TV is newly connected to the secure router, the PC transmits its MAC address, and its category information indicating that the device connected is a "TV", to the secure router. The secure router can determine that the newly connected device is a "TV", by referring to the transmitted category information. Because content with any value level is permitted to be transmitted to a TV, the secure router writes the transmitted MAC address into both the low-value table that is provided for listing devices to which low-value content is permitted to be transmitted, and the high-value table that is provided for listing devices to which high-value content is permitted to be transmitted.

When the secure router routes content from the broadcast receiving device to such a client as a PC or a TV, the secure router receives the content and its transmission target device from the broadcast receiving device, checks a value level of the received content, reads a table corresponding to the value level, and judges whether the MAC address of the transmission target device is included in the read table. When judging that the MAC address is included in the read table, the secure router transmits the content to the client. When judging that the MAC address is not included in the read table, the secure router does not transmit the content to the client.

### <Other Modifications>

Although the present invention is described based on the above embodiments, it should be clear that the present invention is not limited to the above embodiments. For example, the following modifications are within the scope of the present invention.
(1) Although the above embodiments describe the construction where the TV 20 or the PC 30 transmits a content request to the broadcast receiving device 10, the present invention also includes the construction where the broadcast receiving device 10 prestores a transmission target address of content, and transmits content and its corresponding transmission target address prestored therein to the data-communication controlling device 40 upon receipt of the content.
(2) Although the above embodiments describe the construction where the home network is realized by connection via a LAN cable, the present invention also includes the construction where each device belonging to the home network communicates with one another via a wireless LAN.
(3) Although the above embodiments describe the construction where each of the content key "KC", the device key "KA", and the device key "KB" is recorded in advance on a ROM, to allow each key to be shared between devices, the present invention also includes the construction where these keys can be shared by way of communication between devices. A method for sharing keys by way of communication is described in detail in Tatsuaki Okamoto and Hirosuke Yamamoto's *"Gendai Ango* (Modern Cryptography)" published by Sangyo Tosho in 1977. Further, an encryption algorithm used therein is not limited to the DES.
(4) Although the above embodiments describe the case where the judgment table generated by the data-communication controlling device 40 is composed of additional information and device IDs of devices to which content having this additional information is permitted to be transmitted, the construction of the judgment table is not limited to such. For example, the judgment table may be composed of additional information and device IDs of devices to which content having this additional information is not permitted to be transmitted.
(5) Examples of content include digitized movies, music, still images, moving images, game software, computer programs, and various other kinds of data. Also, a path on which content is to be distributed is not limited to digital broadcasting. The present invention also includes other content distribution paths such as the Internet, analogue broadcast waves, cable television, and packaged software.
( 6 ) A device ID used in the above embodiments corresponds to a combination of a device ID and category information in the claims.
(7) Although the above embodiments describe the case where the judgment table is composed of additional information and device IDs of devices to which content is permitted to be transmitted, the present invention also includes the case where the judgment table is composed of additional information and MAC addresses of devices to which content is permitted to be transmitted. The present invention further includes the case where the judgment table is composed of additional information and network addresses of devices to which content is permitted to be transmitted.
(8) The present invention also includes the construction where the broadcast receiving device 10 includes the data-communication controlling device 40. To be more specific, the broadcast receiving device 10 may have the construction and function of the data-communication controlling device 40, and internally store the judgment tables and the address conversion table. In this case, upon receipt of content, the broadcast receiving device 10 may route the content using the judgment tables and the address table.
(9) Although the above embodiments describe the case where two devices, namely, the TV 20 and the PC 30, can be transmission target devices, three or more devices may be provided as transmission target devices. Also, although the above embodiments describe the case where content may be of either of two types, namely, "Free" or "High-Value", the content may be of another type. Further, although the above embodiments describe the case where additional information may be of one of three types, namely, "0", "1", or "2", the additional information may be of another type.
(10) The additional information may be a part or all of a content ID.
(11) When the data size of content is large, the data-communication controlling device 40 may not receive the entire content, but may receive a predetermined part of the content to judge whether the content is permitted to be transmitted. Then, when judging that the content is permitted to be transmitted, the data-communication controlling device 40 may receive the entire content while successively transmitting received parts of the content to a transmission target device.
   Also, although the above embodiments describe the construction where the data-communication controlling device 40 obtains a device ID using the address conversion table upon receipt of a network address, the present invention also includes the construction where a network address is not provided, and the judgment about the permission status to transmit content is performed using only a device ID. In this case, the TV 20 or the PC 30 transmits a content request and a device ID to the broadcast receiving device 10 via the data-communication controlling device 40, and the broadcast receiving device 10 transmits the content and the device ID to the data-communication controlling device 40.
(12) Although the second embodiment describes the construction where the data-communication controlling device 40a limits the number of devices registered and the number of group keys "KG" distributed, by storing the number of devices that can be registered and the number of group keys "KG" that can be distributed, the present invention includes the construction where the number of remote devices registered are limited by storing the number of remote devices that can be registered. In this case, a remote flag included in the address conversion table 500 may be used.
(13) The present invention includes the construction where whether or not such a device as a TV and a PC is to be registered in the address conversion table is judged based on whether the device is connected by wire or wirelessly to the data-communication controlling device 40 (or the data-communication controlling device 40a).
   For example, a signal of noise may be generated on wire, and such a device as a TV and a PC may be instructed to detect the noise signal. By doing so, the judgment as to whether such a device as a TV and a PC is connected by wire or wirelessly to the data-communication controlling device 40 can be performed. When such a device as a TV and a PC detects the noise signal, the device is judged to be connected to the data-communication controlling device 40 by wire, and is registered in the address conversion table. When such a device as a TV and a PC fails to detect the noise signal, the device is judged to be connected to the data-communication controlling device 40 wirelessly or via another routing device, and is not registered in the address conversion table.
   Also, a signal of noise may be generated by such a device as a TV and a PC. Alternatively, a special signal other than a normal signal may be generated instead of a noise signal, and the device may be instructed to detect such a special signal. Further, a wave collision may be generated instead of a signal on the communication path. Also, the RTS/CTS protocol may be utilized.
   By doing so, a device within the home network and a device outside the home network can be judged, and control to transmit content to the device within the home network and not to transmit content to the device outside the home network can also be provided.
(14) In the second embodiment, the number of times content is transmitted to a device outside the home network may be limited. Also, the number of times content is transmitted to a device outside the home network may be made varied depending on the type of the content (High-Value, Free, etc.). Further, transmission of content to a device connected to a plurality of routers may be prohibited.
(15) In the second embodiment, is should be clear that the remote device is not limited to the PDA 90a. For example, the present invention intends to include a portable terminal, a TV placed in a leisure home, and the like, as the remote device.
(16) The broadcast device 60 and the broadcast device 60a should not be limited to satellite broadcasting devices, but the present invention intends to include terrestrial wave broadcasting devices as the broadcast device 60 and the broadcast device 60a.
(17) The present invention may be realized by methods described in the above embodiments. Also, the present invention may be realized by a computer program executed on a computer for realizing these methods, or by a digital signal representing the computer program.
   Also, the present invention may be realized by a computer-readable recording medium on which the computer program or the digital signal is recorded. Examples of the computer-readable recording medium include a flexible disk, a hard disk, a CD-ROM, an MO, a DVD-ROM, a DVD-RAM, and a semiconductor memory. Also, the present invention may be realized by the computer program or the digital signal recorded on such recording media. Further, the present invention may be realized by the computer program or the digital signal transmitted via an electric communication line, a wired/wireless line, or a network such as the Internet.
   Moreover, the present invention may be realized by a computer system including a microprocessor and a memory. The memory may store the computer program, and the microprocessor may operate in accordance with the computer program.
   The computer program or the digital signal may be transferred as being recorded on the recording medium, or via the network and the like, so that the computer program or the digital signal may be executed by another independent computer system.
(18) The above embodiments and the modifications can be freely combined.

Although the present invention has been fully described byway of examples with reference to the accompanying drawings, it is to be noted that various changes and modifications will be apparent to those skilled in the art. Therefore, unless such changes and modifications depart from the scope of the present invention, they should be construed as being included therein.

## Claims

1. A routing device (40) that routes content as audio and video data from a transmission device (10) to one or more reception devices (20,30), the transmission device (10), the reception device (20,30), and the routing device (40) are connected to a home network, the routing device (40) comprising: a table-generation-information storing unit (407) operable to store (a) category information indicating a category to which each reception device (20, 30) belongs, in association with (b) additional information of content that is permitted to be used by a reception device (20, 30) belonging to the category,
**characterized by**
the routing device (40) comprising the following units:
a device-information obtaining unit (402, 403) operable, when a reception device (20, 30) connects to the home network for the first time, to obtain, from a reception device (20, 30), a device ID and a certificate, the device ID including category information indicating a category to which the reception device (20, 30) belongs;
a table generating unit (407) operable to extract, from the table-generation-information storing unit (407), the additional information of content that is permitted to be used by the reception device (20, 30) whose device ID has been obtained by the device-information obtaining unit (402, 403), according to the category information obtained by the device-information obtaining unit (402, 403), and generate a judgment table that includes the extracted additional information and the obtained device ID;
a table storing unit (407) operable to store an address conversion table (420) associating a device ID of each reception device (20, 30) with a network address, and one or more judgment tables (A430, B440) generated by the table generating unit (407);
a receiving unit (408) operable to receive content and a network address of one of the reception devices (20,30) from the transmission device (10), the content including additional information, the additional information indicating a type of the content and being used for determining whether the content is permitted to be distributed;
a device ID obtaining unit operable to obtain, from the address conversion table (420), a device ID that is associated with the network address received by the receiving unit (407);
a selecting unit operable to select, out of the judgment tables (A430, B440), a judgement table that includes additional information matching the additional information included in the content received by the receiving unit (408);
a judging unit (407) operable to judge whether the obtained device ID is included in the selected judgment table;
and a routing unit (407) operable to (i) transmit the content received by the receiving unit (408) to the one of the reception devices (20, 30) identified by the device ID obtained by the judging unit (407) when a judgment result by the judging unit is affirmative, and (ii) prohibit transmission of the content received by the receiving unit (408) to the one of the reception devices (20, 30) identified by the device ID obtained by the judging unit (407) when a judgment result by the judging unit (407) is negative.

2. The routing device of Claim 1, wherein the device-information obtaining unit (402, 403) is operable to further obtain, from the reception device (20, 30), a certificate that is used to authenticate the device ID and the category information, and the table generating unit (407) includes:
an authentication unit (404) operable to check the certificate obtained by the device-information obtaining unit (402, 403), so as to authenticate the device ID and the category information;
an address generating unit operable to generate a network address when the device ID and the category information have been successfully authenticated by the authentication unit (404); and
an address-conversion-table generating unit (407) operable to transmit the generated network address to the reception device (20, 30) whose device ID has been obtained by the device-information obtaining unit (402, 403), and generate an address conversion table associating the generated network address with the obtained device ID.

3. The routing device of Claim 2, wherein the routing device (40) receives, from the one of the reception devices (20, 30), (a) request information indicating a request for content and (b) a network address, transmits the received request information and the received network address to the transmission device (10), and receives the content corresponding to the request information and the network address from the transmission device (10).

4. The routing device of Claim 3, wherein the content is composed of (a) content information including video data and audio data, and (b) the additional information, the receiving unit (408) is operable to receive encrypted content that is composed of (c) encrypted content information generated by encrypting the content information using a content key, and (d) the additional information, and the routing device (40) includes:
a key storing unit (407) operable to store the content key that is shared with the transmission device (10), and
a different device key that is shared with each reception device (20,30);
a decrypting unit (405) operable to decrypt the encrypted content information received from the transmission device (10), using the content key, so as to generate content information;
and an encrypting unit (406) operable to encrypt the generated content information using a device key shared with the one of the reception devices (20, 30), and transmit encrypted content that is composed of the encrypted content information and the additional information, to the one of the reception devices (20, 30).

5. A content distributing system (1) in which a transmission device (10) transmits content to one or more reception devices (20, 30) via the routing device (40) defined in claim 1, the content distributing system (1) comprising:
a transmission device (10) operable to transmit content and a network address of one of the reception devices (20,30) to the routing device (40), the content having additional information relating to use of the content,
**characterized by** the routing device (40) including:
a table-generation-information storing unit (407) operable to store (a) category information indicating a category to which each reception device (20, 30) belongs, in association with (b) additional information of content that is permitted to be used by a reception device (20, 30) belonging to the category,
a device-information obtaining unit (402, 403) operable, when a reception device (20, 30) connects to the home network for the first time, to obtain, from a reception device (20, 30),
a device ID and a certificate, the device ID including category information indicating a category to which the reception device (20, 30) belongs:
a table generating unit (407) operable to extract, from the table-generation-information storing unit (407), the additional information of content that is permitted to be used by the reception device (20, 30) whose device ID has been obtained by the device-information obtaining unit (402, 403), according to the category information obtained by the device-information obtaining unit (402, 403), and generate a judgment table that includes the extracted additional information and the obtained device ID:
a table storing unit (407) operable to store an address conversion table (420) associating a device ID of each reception device (20, 30) with a network address, and one or more judgment tables (A430, B440) generated by the table generating unit (407):
a receiving unit (408) operable to receive content and a network address of one of the reception devices (20,30) from the transmission device (10), the content including additional information, the additional information indicating a type of the content and being used for determining whether the content is permitted to be distributed:
a device ID obtaining unit operable to obtain, from the address conversion table (420), a device ID that is associated with the network address received by the receiving unit (407):
a selecting unit operable to select, out of the judgment tables (A430, B440), a judgment table that includes additional information matching the additional information included in the content received by the receiving unit (408):
a judging unit operable to judge whether the obtained device ID is included in the selected judgment table:
a routing unit (407) operable to (i) transmit the content received by the receiving unit f408) to the one of the reception devices (20, 30) identified by the device ID obtained by the
judging unit (407) when a judgment result by the judging unit is affirmative, and (ii) prohibit transmission of the content received by the receiving unit (408) to the one of the reception devices (20, 30) identified by the device ID obtained by the judging unit (407) when a judgment result by the judging unit (407) is negative:
and
a reception device (20, 30) operable to receive content transmitted by the routing device (40).

6. The content distributing system of Claim 5, further comprising a table updating device (50) that transmits, to the routing device (40), update-information to be used for updating a judgment table (A430, B440) stored in the routing device (40),wherein the routing device (40) receives the update-information from the table updating device (50), and updates the judgment table (A430, B440) based upon the received update-information.

7. A routing method for use in a routing device that routes content as audio and video data from a transmission device (10) to one or more reception devices (20, 30), the transmission device (10), the reception devices (20, 30), and the routing device (40) being connected to a home network,
**characterized by**
the routing method comprising the steps, which are executed in the routing device (40), of:
a table-generation-information storing step of storing (a) category information indicating a category to which each reception device belongs, in association with (b) additional information of content that is permitted to be used by a reception device (20, 30) belonging to the category,
a device-information obtaining step of obtaining, when a reception device (20, 30) connects to the home network for the first time, from the reception device (20, 30), a device ID and a certificate, the device ID including category information indicating a category to which the reception device (20, 30) belongs;
a table generating step of extracting, from the table-generation-information storing unit, the additional information of content that is permitted to be used by the reception device (20, 30) whose device ID has been obtained in the device-information obtaining step, according to the category information obtained in the device-information obtaining step, and
generating a judgment table (A430, B440) that includes the extracted additional information and the obtained device ID;
a table storing step of storing an address conversion table associating a device ID of each reception device (20, 30) with a network address, and one or more judgment tables (A430, B440) generated in the table generating step;
a receiving step of receiving content and a network address of one of the reception devices (20, 30) from the transmission device (10), the content including additional information, the additional information indicating a type of the content and being used for determining whether the content is permitted to be distributed;
a device ID obtaining step of obtaining, from the address conversion table, a device ID that is associated with the network address received in the receiving step,
a selecting step of selecting, out of the judgment tables (A430, B440), a judgment table that includes additional information matching the additional information included in the content received in the receiving step;
a judging step of judging whether the obtained device ID is included in the selected judgment table;
and a routing step of (i) transmitting the content received in the receiving step to the one of the reception devices (20, 30) identified by the device ID obtained in the judging step when a judgment result by the judging step is affirmative, and (ii) prohibiting transmission of the content received by the receiving unit (408) to the one of the reception devices (20, 30) identified by the device ID obtained by the judging unit (407) when a judgment result by the judging step is negative.

8. A computer program product loadable in the memory of a computer, comprising all the software code portions for performing the steps of method claim 7, when said product is run on a computer.

9. A computer-readable recording medium on which is recorded a routing program used by a routing device that routes content as audio and video data from a transmission device (10) to one or more reception devices (20, 30), the transmission device (10), the reception device (20, 30), and the routing device (40) are connected to a home network,
**characterized by** the routing program causing the routing device to perform the steps of:
a table-generation-information storing step of storing (a) category information indicating a category to which each reception device belongs, in association with (b) additional information of content that is permitted to be used by a reception device belonging to the category,
a device-information obtaining step of obtaining, when a reception device connects to the home network for the first time, from the reception device, a device ID and a certificate, the device ID including category information indicating a category to which the reception device belongs;
a table generating step of extracting, from the table-generation-information storing unit, the additional information of content that is permitted to be used by the reception device whose device ID has been obtained in the device-information obtaining step, according to the category information obtained in the device-information obtaining step, and generating a judgment table that includes the extracted additional information and the obtained device ID;
a table storing step of storing an address conversion table associating a device ID of each reception deice with a network address, and one or more judgment tables generated in the table generating step;
a receiving step of receiving content and a network address of one of the reception devices from the transmission device, the content including additional information, the additional information indicating a type of the content and being used for determining whether the content is permitted to be distributed;
a device ID obtaining step of obtaining, from the address conversion table, a device ID that is associated with the network address received in the receiving step,
a selecting step of selecting, out of the judgment tables, a judgment table that includes additional information matching the additional information included in the content received in the receiving step;
a judging step of judging whether the obtained device ID is included in the selected judgment table;
and a routing step of (i) transmitting the content received in the receiving step to the one of the reception devices identified by the device ID obtained in the judging step when a judgment result by the judging step is affirmative, and (ii) prohibiting transmission of the content received by the receiving unit (408) to the one of the reception devices (20, 30) identified by the device ID obtained by the judging unit (407) when a judgment result by the judging step is negative.

## Patentansprüche

1. Router (40), der Inhalt wie Audio- und Videodaten von einem Sendegerät (10) an ein oder mehrere Empfangsgeräte (20, 30) routet, wobei das Sendegerät (10), das Empfangsgerät (20, 30) und der Router (40) mit einem Heimnetzwerk verbunden sind und der Router (40) umfasst: eine Tabellengenerierungs-Informationsspeichereinheit (407), die dazu fähig ist, (a) Kategorieinformationen, die eine Kategorie anzeigen, zu der das jeweilige Empfangsgerät (20, 30) gehört, in Verbindung mit (b) zusätzlichen Informationen über Inhalt zu speichern, der von einem Empfangsgerät (20, 30) verwendet werden darf, das zu der Kategorie gehört,
**dadurch gekennzeichnet,**
**dass** der Router (40) folgende Einheiten umfasst:
eine Geräteinformations-Abrufeinheit (402, 403), die, wenn sich ein Empfangsgerät (20, 30) zum ersten Mal mit dem Heimnetzwerk verbindet, dazu fähig ist, von einem Empfangsgerät (20, 30) eine Geräte-ID und ein Zertifikat abzurufen, wobei die Geräte-ID Kategorieinformationen enthält, die eine Kategorie anzeigen, zu der das Empfangsgerät (20, 30) gehört;
eine Tabellengenerierungseinheit (407), die dazu fähig ist, aus der Tabellengenerierungs-Informationsspeichereinheit (407) die zusätzlichen Informationen über Inhalt, der von dem Empfangsgerät (20, 30) verwendet werden darf, dessen Geräte-ID von der Geräteinformations-Abrufeinheit (402, 403) abgerufen wurde, in Übereinstimmung mit den Kategorieinformationen zu extrahieren, die von der Geräteinformations-Abrufeinheit (402, 403) abgerufen wurden und eine Beurteilungstabelle zu generieren, welche die extrahierten zusätzlichen Informationen und die abgerufene Geräte-ID enthält;
eine Tabellenspeichereinheit (407), die dazu fähig ist, eine Adressenumrechnungstabelle (420), die eine Geräte-ID der einzelnen Empfangsgeräte (20, 30) einer Netzwerkadresse zuordnet, sowie eine oder mehrere Beurteilungstabellen (A430, B440) zu speichern, die von der Tabellengenerierungseinheit (407) generiert wurden;
eine Empfangseinheit (408), die dazu fähig ist, Inhalt und eine Netzwerkadresse von einem der Empfangsgeräte (20, 30) von dem Sendegerät (10) zu empfangen,
wobei der Inhalt zusätzliche Informationen enthält und die zusätzlichen Informationen einen Typ des Inhalts anzeigen und zum Bestimmen verwendet werden, ob der Inhalt zur Verteilung zugelassen ist;
eine Geräte-ID-Abrufeinheit, die dazu fähig ist, aus der Adressenumrechnungstabelle (420) eine Geräte-ID abzurufen, die der durch die Empfangseinheit (407) empfangenen Netzwerkadresse zugeordnet ist;
eine Auswahleinheit, die dazu fähig ist, aus den Beurteilungstabellen (A430, B440) eine Beurteilungstabelle auszuwählen, die zusätzliche Informationen enthält, welche mit den zusätzlichen Informationen in dem durch die Empfangseinheit (408) empfangenen Inhalt übereinstimmen;
eine Beurteilungseinheit (407), die dazu fähig ist, zu beurteilen, ob die abgerufene Geräte-ID in der ausgewählten Beurteilungstabelle enthalten ist;
eine Routereinheit (407), die dazu fähig ist, (i) den durch die Empfangseinheit (408) empfangenen Inhalt an eines der Empfangsgeräte (20, 30), das durch die von der Beurteilungseinheit (407) abgerufene Geräte-ID identifiziert wurde, zu senden, wenn ein Beurteilungsergebnis der Beurteilungseinheit positiv ist, und (ii) das Senden des von der Empfangseinheit (408) empfangenen Inhalts an eines der Empfangsgeräte (20, 30), das durch die von der Beurteilungseinheit (407) abgerufene Geräte-ID identifiziert wurde, zu verhindern, wenn ein Beurteilungsergebnis von der Beurteilungseinheit (407) negativ ist.

2. Router nach Anspruch 1, wobei die Geräteinformations-Abrufeinheit (402, 403) des Weiteren dazu fähig ist, von dem Empfangsgerät (20, 30) ein Zertifikat abzurufen, das zur Authentifizierung der Geräte-ID und der Kategorieinformationen verwendet wird, und die Tabellengenerierungseinheit (407) aufweist:
eine Authentifizierungseinheit (404), die dazu fähig ist, das von der Geräteinformations-Abrufeinheit (402, 403) abgerufene Zertifikat zu überprüfen, um die Geräte-ID und die Kategorieinformationen zu authentifizieren;
eine Adressengenerierungseinheit, die dazu fähig ist, eine Netzwerkadresse zu generieren, wenn die Geräte-ID und die Kategorieinformationen erfolgreich von der Authentifizierungseinheit (404) authentifiziert worden sind; und
eine Adressenumrechnungstabellen-Generierungseinheit (407), die dazu fähig ist,
die generierte Netzwerkadresse an das Empfangsgerät (20, 30) zu senden, dessen Geräte-ID von der Geräteinformations-Abrufeinheit (402, 403) abgerufen wurde, und eine Adressenumwandlungstabelle zu generieren, welche die erzeugte Netzwerkadresse der abgerufenen Geräte-ID zuordnet.

3. Router nach Anspruch 2, wobei der Router (40) von dem einen Empfangsgerät (20, 30) (a) Anfrageinformationen, welche eine Anfrage nach Inhalt anzeigen und (b) eine Netzwerkadresse empfängt, die empfangenen Anfrageinformationen und die empfangene Netzwerkadresse an das Sendegerät (10) sendet und den Inhalt entsprechend den Anfrageinformationen und der Netzwerkadresse von dem Sendegerät (10) empfängt.

4. Router nach Anspruch 3, wobei der Inhalt aus (a) Inhaltsinformationen einschließlich Videodaten und Audiodaten und (b) den zusätzlichen Informationen besteht, die Empfangseinheit (408) dazu fähig ist, verschlüsselten Inhalt zu empfangen, der aus (c) verschlüsselten Inhaltsinformationen, die durch Verschlüsseln der Inhaltsinformationen unter Verwendung eines Inhaltsschlüssels generiert wurden und (d) den zusätzlichen Informationen besteht, und der Router (40) aufweist:
eine Schlüsselspeichereinheit (407), die dazu fähig ist, den Inhaltsschlüssel zu
speichern, der mit dem Sendegerät (10) geteilt wird, und
einen anderen Geräteschlüssel, der mit den einzelnen Empfangsgeräten (20, 30) geteilt wird;
eine Entschlüsselungseinheit (405), die dazu fähig ist, die von dem Sendegerät (10) empfangenen verschlüsselten Inhaltsinformationen unter Verwendung des Inhaltsschlüssels zu entschlüsseln, um Inhaltsinformationen zu generieren; und eine Verschlüsselungseinheit (406), die dazu fähig ist, die generierten Inhaltsinformationen unter Verwendung eines Geräteschlüssels, der mit dem einen der Empfangsgeräte (20, 30) geteilt wird, zu verschlüsseln und den verschlüsselten Inhalt,
der aus den verschlüsselten Inhaltsinformationen und der zusätzlichen Information besteht, an das eine der Empfangsgeräte (20, 30) zu senden.

5. System zur Inhaltsverteilung (1), in dem ein Sendegerät (10) Inhalt über den in Anspruch 1 definierten Router (40) an ein oder mehrere Empfangsgeräte (20, 30) sendet, wobei das System zur Inhaltsverteilung (1) umfasst:
ein Sendegerät (10), das dazu fähig ist, Inhalt und eine Netzwerkadresse von einem der Empfangsgeräte (20, 30) an den Router (40) zu senden, wobei der Inhalt zusätzliche Informationen betreffend die Verwendung des Inhalts aufweist,
**dadurch gekennzeichnet,**
**dass** der Router (40) umfasst:
eine Tabellengenerierungs-Informationsspeichereinheit (407), die dazu fähig ist,
(a) Kategorieinformationen, die eine Kategorie anzeigen, zu der das jeweilige Empfangsgerät (20, 30) gehört, in Verbindung mit (b) zusätzlichen Informationen über Inhalt zu speichern, der von einem Empfangsgerät (20, 30) verwendet werden darf, das zu der Kategorie gehört,
eine Geräteinformations-Abrufeinheit (402, 403), die, wenn sich ein Empfangsgerät (20, 30) zum ersten Mal mit dem Heimnetzwerk verbindet, dazu fähig ist, von
einem Empfangsgerät (20, 30) eine Geräte-ID und ein Zertifikat abzurufen, wobei die Geräte-ID Kategorieinformationen enthält, die eine Kategorie anzeigen, zu der das Empfangsgerät (20, 30) gehört;
eine Tabellengenerierungseinheit (407), die dazu fähig ist, aus der Tabellengenerierungs-Informationsspeichereinheit (407) die zusätzlichen Informationen über Inhalt, der von dem Empfangsgerät (20, 30) verwendet werden darf, dessen Geräte-ID von der Geräteinformations-Abrufeinheit (402, 403) abgerufen wurde, in Übereinstimmung mit den Kategorieinformationen zu extrahieren, die von der Geräteinformations-Abrufeinheit (402, 403) abgerufen wurden und eine Beurteilungstabelle zu generieren, welche die extrahierten zusätzlichen Informationen und die abgerufene Geräte-ID enthält;
eine Tabellenspeichereinheit (407), die dazu fähig ist, eine Adressenumrechnungstabelle (420), die eine Geräte-ID der einzelnen Empfangsgeräte (20, 30) einer Netzwerkadresse zuordnet, sowie eine oder mehrere Beurteilungstabellen (A430, B440) zu speichern, die von der Tabellengenerierungseinheit (407) generiert wurden;
eine Empfangseinheit (408), die dazu fähig ist, Inhalt und eine Netzwerkadresse von einem der Empfangsgeräte (20, 30) von dem Sendegerät (10) zu empfangen,
wobei der Inhalt zusätzliche Informationen enthält und die zusätzlichen Informationen einen Typ des Inhalts anzeigen und zum Bestimmen verwendet werden, ob der Inhalt zur Verteilung zugelassen ist;
eine Geräte-ID-Abrufeinheit, die dazu fähig ist, aus der Adressenumrechnungstabelle (420) eine Geräte-ID abzurufen, die der durch die Empfangseinheit (407) empfangenen Netzwerkadresse zugeordnet ist;
eine Auswahleinheit, die dazu fähig ist, aus den Beurteilungstabellen (A430, B440) eine Beurteilungstabelle auszuwählen, die zusätzliche Informationen enthält, welche mit den zusätzlichen Informationen in dem durch die Empfangseinheit (408) empfangenen Inhalt übereinstimmen;
eine Beurteilungseinheit (407), die dazu fähig ist, zu beurteilen, ob die abgerufene Geräte-ID in der ausgewählten Beurteilungstabelle enthalten ist;
eine Routereinheit (407), die dazu fähig ist, (i) den durch die Empfangseinheit (408) empfangenen Inhalt an eines der Empfangsgeräte (20, 30), das durch die von der Beurteilungseinheit (407) abgerufene Geräte-ID identifiziert wurde, zu senden, wenn ein Beurteilungsergebnis der Beurteilungseinheit positiv ist, und (ii) das Senden des von der Empfangseinheit (408) empfangenen Inhalts an eines der Empfangsgeräte (20, 30), das durch die von der Beurteilungseinheit (407) abgerufene Geräte-ID identifiziert wurde, zu verhindern, wenn ein Beurteilungsergebnis von der Beurteilungseinheit (407) negativ ist;
und
ein Empfangsgerät (20, 30), das dazu fähig ist, den von dem Router (40) gesendeten Inhalt zu empfangen.

6. System zur Inhaltsverteilung nach Anspruch 5, des Weiteren umfassend eine Tabellenaktualisierungsvorrichtung (50) die Aktualisierungsinformationen an den Router (40) sendet, welche zur Aktualisierung einer in dem Router (40) gespeicherten Beurteilungstabelle (A430, B440) verwendet werden sollen, wobei der Router (40) die Aktualisierungsinformationen von der Tabellenaktualisierungsvorrichtung (50) empfängt und die Beurteilungstabelle (A430, B440) basierend auf den empfangenen Aktualisierungsinformationen aktualisiert.

7. Routingverfahren zur Verwendung in einem Router, der Inhalt wie Audio- und Videodaten von einem Sendegerät (10) an ein oder mehrere Empfangsgeräte (20, 30) routet, wobei das Sendegerät (10), die Empfangsgeräte (20, 30) und der Router (40) mit einem Heimnetzwerk verbunden sind,
**dadurch gekennzeichnet,**
**dass** das Routingverfahren folgende Schritte umfasst, die in dem Router (40) ausgeführt werden:
einen Tabellengenerierungs-Informationsspeicherschritt, in dem (a) Kategorieinformationen, die eine Kategorie anzeigen, zu der das jeweilige Empfangsgerät gehört, in Verbindung mit (b) zusätzlichen Informationen über Inhalt gespeichert werden, der von einem Empfangsgerät (20, 30) verwendet werden darf, das zu der Kategorie gehört,
einen Geräteinformations-Abrufschritt, in dem, wenn sich ein Empfangsgerät (20, 30) zum ersten Mal mit dem Heimnetzwerk verbindet, von dem Empfangsgerät (20, 30) eine Geräte-ID und ein Zertifikat abgerufen werden, wobei die Geräte-ID Kategorieinformationen enthält, die eine Kategorie anzeigen, zu der das Empfangsgerät (20, 30) gehört;
einen Tabellengenerierungsschritt, in dem aus der Tabellengenerierungs-Informationsspeichereinheit die zusätzlichen Informationen über Inhalt, der von dem Empfangsgerät (20, 30) verwendet werden darf, dessen Geräte-ID in dem Geräteinformations-Abrufschritt abgerufen wurde, in Übereinstimmung mit den Kategorieinformationen extrahiert werden, die in dem Geräteinformations-Abrufschritt abgerufen wurden und eine Beurteilungstabelle (A430, B440) generiert wird, welche die extrahierten zusätzlichen Informationen und die abgerufene Geräte-ID enthält;
einen Tabellenspeicherschritt, in dem eine Adressenumrechnungstabelle, die eine Geräte-ID der einzelnen Empfangsgeräte (20, 30) einer Netzwerkadresse zuordnet, sowie eine oder mehrere Beurteilungstabellen (A430, B440) gespeichert werden, die in dem Tabellengenerierungsschritt generiert wurden;
einen Empfangsschritt, in dem Inhalt und eine Netzwerkadresse eines der Empfangsgeräte (20, 30) von dem Sendegerät (10) empfangen wird, wobei der Inhalt zusätzliche Informationen enthält und die zusätzlichen Informationen einen Typ des Inhalts anzeigen und zum Bestimmen verwendet werden, ob der Inhalt zur Verteilung zugelassen ist;
einen Geräte-ID-Abrufschritt, in dem aus der Adressenumrechnungstabelle eine
Geräte-ID abgerufen wird, die der in dem Empfangsschritt empfangenen Netzwerkadresse zugeordnet ist;
einen Auswahlschritt, in dem aus den Beurteilungstabellen (A430, B440) eine Beurteilungstabelle ausgewählt wird, die zusätzliche Informationen enthält, welche mit den zusätzlichen Informationen in dem Inhalt übereinstimmen, der in dem Empfangsschritt empfangen wurde;
einen Beurteilungsschritt, in dem beurteilt wird, ob die abgerufene Geräte-ID in der ausgewählten Beurteilungstabelle enthalten ist;
und einen Routingschritt, in dem (i) der in dem Empfangsschritt empfangene Inhalt an das eine der Empfangsgeräte (20, 30), das durch die in dem Beurteilungsschritt abgerufene Geräte-ID identifiziert wurde, gesendet wird, wenn ein Beurteilungsergebnis aus dem Beurteilungsschritt positiv ist, und (ii) das Senden des von der Empfangseinheit (408) empfangenen Inhalts an eines der Empfangsgeräte (20, 30), das durch die von der Beurteilungseinheit (407) abgerufene Geräte-ID identifiziert wurde, verhindert wird, wenn ein Beurteilungsergebnis aus dem Beurteilungsschritt negativ ist.

8. Computerprogrammprodukt, das im Speicher eines Computer geladen werden kann und alle Softwarecodeteile zum Durchführen der Schritte des Verfahrens nach Anspruch 7 umfasst, sobald dieses Produkt auf einem Computer ausgeführt wird.

9. Computerlesbares Aufzeichnungsmedium, auf dem ein Routingprogramm aufgezeichnet ist, das von einem Router verwendet wird, der Inhalt wie Audio- und Videodaten von einem Sendegerät (10) an ein oder mehrere Empfangsgeräte (20, 30) routet, wobei das Sendegerät (10), die Empfangsgeräte (20, 30) und der Router (40) mit einem Heimnetzwerk verbunden sind,
**dadurch gekennzeichnet,**
**dass** das Routingprogramm den Router zur Durchführung folgender Schritte veranlasst:
einen Tabellengenerierungs-Informationsspeicherschritt, in dem (a) Kategorieinformationen, die eine Kategorie anzeigen, zu der das jeweilige Empfangsgerät gehört, in Verbindung mit (b) zusätzlichen Informationen über Inhalt gespeichert werden, der von einem Empfangsgerät verwendet werden darf, das zu der Kategorie gehört,
einen Geräteinformations-Abrufschritt, in dem, wenn sich ein Empfangsgerät zum ersten Mal mit dem Heimnetzwerk verbindet, von diesem eine Geräte-ID und ein Zertifikat abgerufen werden, wobei die Geräte-ID Kategorieinformationen enthält,
die eine Kategorie anzeigen, zu der das Empfangsgerät gehört;
einen Tabellengenerierungsschritt, in dem aus der Tabellengenerierungs-Informationsspeichereinheit die zusätzlichen Informationen über Inhalt, der von dem Empfangsgerät verwendet werden darf, dessen Geräte-ID in dem Geräteinformations-Abrufschritt abgerufen wurde, in Übereinstimmung mit den Kategorieinformationen extrahiert werden, die in dem Geräteinformations-Abrufschritt abgerufen wurden und eine Beurteilungstabelle generiert wird, welche die extrahierten zusätzlichen Informationen und die abgerufene Geräte-ID enthält;
einen Tabellenspeicherschritt, in dem eine Adressenumrechnungstabelle, die eine Geräte-ID der einzelnen Empfangsgeräte einer Netzwerkadresse zuordnet, sowie eine oder mehrere Beurteilungstabellen gespeichert werden, die in dem Tabellengenerierungsschritt generiert wurden;
einen Empfangsschritt, in dem Inhalt und eine Netzwerkadresse von einem der Empfangsgeräte von dem Sendegerät empfangen wird, wobei der Inhalt zusätzliche Informationen enthält und die zusätzlichen Informationen einen Typ des Inhalts anzeigen und zum Bestimmen verwendet werden, ob der Inhalt zur Verteilung zugelassen ist;
einen Geräte-ID-Abrufschritt, in dem aus der Adressenumrechnungstabelle eine Geräte-ID abgerufen wird, die der in dem Empfangsschritt empfangenen Netzwerkadresse zugeordnet ist;
einen Auswahlschritt, in dem aus den Beurteilungstabellen eine Beurteilungstabelle ausgewählt wird, die zusätzliche Informationen enthält, welche mit den zusätzlichen Informationen in dem Inhalt übereinstimmen, der in dem Empfangsschritt empfangen wurde;
einen Beurteilungsschritt, in dem beurteilt wird, ob die abgerufene Geräte-ID in der ausgewählten Beurteilungstabelle enthalten ist;
und einen Routingschritt, in dem (i) der in dem Empfangsschritt empfangene Inhalt an eines der Empfangsgeräte, das durch die in dem Beurteilungsschritt abgerufene Geräte-ID identifiziert wurde, gesendet wird, wenn ein Beurteilungsergebnis aus dem Beurteilungsschritt positiv ist, und (ii) das Senden des von der Empfangseinheit (408) empfangenen Inhalts an eines der Empfangsgeräte (20, 30),
das durch die von der Beurteilungseinheit (407) abgerufene Geräte-ID identifiziert wurde, verhindert wird, wenn ein Beurteilungsergebnis aus dem Beurteilungsschritt negativ ist.

## Revendications

1. Dispositif de routage (40) routant un contenu tel que des données audio et vidéo depuis un dispositif de transmission (10) vers un ou plusieurs dispositifs de réception (20, 30), le dispositif de transmission (10), le dispositif de réception (20, 30) et le dispositif de routage (40) étant connectés à un réseau domestique, le dispositif de routage (40) comprenant : une unité de stockage d'information de génération de table (407) utilisable pour stocker (a) de l'information de catégorie qui indique une catégorie à laquelle appartient chaque dispositif de réception (20, 30), en association avec (b) de l'information de contenu additionnelle dont l'utilisation par un dispositif de réception (20, 30) appartenant à la catégorie est permise,
**caractérisé en ce que**
le dispositif de routage (40) comprend les unités suivantes :
une unité d'obtention d'information de dispositif (402, 403) utilisable, lorsqu'un dispositif de réception (20, 30) se connecte au réseau domestique pour la première fois, pour obtenir d'un dispositif de réception (20, 30) un certificat et un identifiant de dispositif, l'identifiant de dispositif comprenant de l'information de catégorie qui indique une catégorie à laquelle appartient le dispositif de réception (20, 30) ;
une unité de génération de table (407) utilisable pour extraire de l'unité de stockage d'information de génération de table (407) l'information de contenu additionnelle dont l'utilisation est permise, par le dispositif de réception (20, 30) dont l'identifiant de dispositif a été obtenu par l'unité d'obtention d'information de dispositif (402, 403), conformément à l'information de catégorie obtenue par l'unité d'obtention d'information de dispositif (402, 403), et pour générer une table d'évaluation qui comprend l'information additionnelle extraite et l'identifiant de dispositif obtenu ;
une unité de stockage de table (407) utilisable pour stocker une table de conversion d'adresse associant un identifiant de dispositif de chaque dispositif de réception (20, 30) à une adresse de réseau, et une ou plusieurs tables d'évaluation (A430, B440) générées par l'unité de génération de table (407) ;
une unité de réception (408) utilisable pour recevoir un contenu et une adresse de réseau d'un des dispositifs de réception (20, 30) provenant du dispositif de transmission (10), le contenu comprenant de l'information additionnelle, l'information additionnelle indiquant un type du contenu et étant utilisée pour déterminer s'il est permis ou non de distribuer le contenu ;
une unité d'obtention d'identifiant de dispositif utilisable pour obtenir, à partir de la table de conversion d'adresse (420), un identifiant de dispositif qui est associé à l'adresse de réseau reçue par l'unité de réception (407) ;
une unité de sélection utilisable pour sélectionner, parmi les tables d'évaluation (A430, B440), une table d'évaluation qui comprend de l'information additionnelle correspondant à l'information additionnelle comprise dans le contenu reçu par l'unité de réception (408) ;
une unité d'évaluation (407) utilisable pour évaluer si l'identifiant de dispositif obtenu est compris ou non dans la table d'évaluation sélectionnée ;
et une unité de routage (407) utilisable pour (i) transmettre le contenu reçu par l'unité de réception (408) audit un des dispositifs de réception (20, 30) identifié par l'identifiant de dispositif obtenu par l'unité d'évaluation (407) lorsqu'un résultat d'évaluation par l'unité d'évaluation est affirmatif, et (ii) interdire la transmission du contenu reçu par l'unité de réception (408) audit un des dispositifs de réception (20, 30) identifié par l'identifiant de dispositif obtenu par l'unité d'évaluation (407) lorsqu'un résultat d'évaluation par l'unité d'évaluation (407) est négatif.

2. Dispositif de routage selon la revendication 1, dans lequel l'unité d'obtention d'information de dispositif (402, 403) est utilisable pour obtenir en outre, du dispositif de réception (20, 30), un certificat qui est utilisé pour authentifier l'identifiant de dispositif et l'information de catégorie, et l'unité de génération de table (407) comprend :
une unité d'authentification (404) utilisable pour vérifier le certificat obtenu par l'unité d'obtention d'information de dispositif (402, 403) afin d'authentifier l'identifiant de dispositif et l'information de catégorie ;
une unité de génération d'adresse utilisable pour générer une adresse de réseau lorsque l'identifiant de dispositif et l'information de catégorie ont été authentifiés avec succès par l'unité d'authentification (404) ; et
une unité de génération de table de conversion d'adresse (407) utilisable pour transmettre l'adresse de réseau générée au dispositif de réception (20, 30) dont l'identifiant de dispositif a été obtenu par l'unité d'obtention d'information de dispositif (402, 403), et pour générer une table de conversion d'adresse associant l'adresse de réseau générée à l'identifiant de dispositif obtenu.

3. Dispositif de routage selon la revendication 2, dans lequel le dispositif de routage (40) reçoit, depuis ledit un des dispositifs de réception (20, 30), (a) une information de demande indiquant une demande de contenu et (b) une adresse de réseau, transmet l'information de demande reçue et l'adresse de réseau reçue au dispositif de transmission (10), et reçoit le contenu correspondant à l'information de demande et l'adresse de réseau du dispositif de transmission (10).

4. Dispositif de routage selon la revendication 3, dans lequel le contenu est constitué (a) d'information de contenu comprenant des données vidéo et des données audio, et (b) d'information additionnelle, l'unité de réception (408) est utilisable pour recevoir un contenu chiffré qui est composé (c) d'information de contenu chiffrée générée par le chiffrage de l'information de contenu en utilisant une clé de contenu, et (d) d'information additionnelle, et le dispositif de routage (40) comprend :
une unité de stockage de clé (407) utilisable pour stocker la clé de contenu qui est partagée avec le dispositif de transmission (10), et
une clé de dispositif différente qui est partagée avec chaque dispositif de réception (20, 30) ;
une unité de déchiffrage (405) utilisable pour déchiffrer l'information de contenu chiffrée reçue du dispositif de transmission (10) en utilisant la clé de contenu, de manière à générer de l'information de contenu ; et une unité de chiffrage (406) utilisable pour chiffrer l'information de contenu générée en utilisant une clé de dispositif partagée avec ledit un des dispositifs de réception (20, 30), et pour transmettre un contenu chiffré, qui est composé de l'information de contenu chiffrée et de l'information additionnelle, audit un des dispositifs de réception (20, 30).

5. Système de distribution de contenu (1) dans lequel un dispositif de transmission (10) transmet du contenu à un ou plusieurs dispositifs de réception (20, 30) via le dispositif de routage (40) selon la revendication 1, le système de distribution de contenu (1) comprenant :
un dispositif de transmission (10) utilisable pour transmettre un contenu et une adresse de réseau d'un des dispositifs de réception (20, 30) au dispositif de routage (40), le contenu disposant d'information additionnelle relative à l'utilisation du contenu,
**caractérisé en ce que**
le dispositif de routage (40) comprend :
une unité de stockage d'information de génération de table (407) utilisable pour stocker (a) de l'information de catégorie qui indique une catégorie à laquelle appartient chaque dispositif de réception (20, 30), en association avec (b) de l'information de contenu additionnelle dont l'utilisation par un dispositif de réception (20, 30) appartenant à la catégorie est permise,
une unité d'obtention d'information de dispositif (402, 403) utilisable, lorsqu'un dispositif de réception (20, 30) se connecte au réseau domestique pour la première fois, pour obtenir d'un dispositif de réception (20, 30) un identifiant de dispositif et un certificat, l'identifiant de dispositif comprenant de l'information de catégorie qui indique une catégorie à laquelle appartient le dispositif de réception (20, 30) ;
une unité de génération de table (407) utilisable pour extraire de l'unité de stockage d'information de génération de table (407) l'information de contenu additionnelle dont l'utilisation est permise, par le dispositif de réception (20, 30) dont l'identifiant de dispositif a été obtenu par l'unité d'obtention d'information de dispositif (402, 403), conformément à l'information de catégorie obtenue par l'unité d'obtention d'information de dispositif (402, 403), et pour générer une table d'évaluation qui comprend l'information additionnelle extraite et l'identifiant de dispositif obtenu ;
une unité de stockage de table (407) utilisable pour stocker une table de conversion d'adresse (420) associant un identifiant de dispositif de chaque dispositif de réception (20, 30) à une adresse de réseau, et une ou plusieurs tables d'évaluation (A430, B440) générées par l'unité de génération de table (407) ;
une unité de réception (408) utilisable pour recevoir du dispositif de transmission (10) un contenu et une adresse de réseau d'un desdits dispositifs de réception (20, 30), le contenu comprenant de l'information additionnelle, l'information additionnelle indiquant un type du contenu et étant utilisée pour déterminer si la distribution du contenu est permise ou non ;
une unité d'obtention d'un identifiant de dispositif utilisable pour obtenir, à partir de la table de conversion d'adresse (420), un identifiant de dispositif qui est associée à l'adresse de réseau reçue par l'unité de réception (407) ;
une unité de sélection utilisable pour sélectionner, parmi les tables d'évaluation (A430, B440), une table d'évaluation qui comprend de l'information additionnelle correspondant à l'information additionnelle comprise dans le contenu reçu par l'unité de réception (408) ;
une unité d'évaluation utilisable pour évaluer si l'identifiant de dispositif obtenu est inclus ou non dans la table d'évaluation sélectionnée ;
une unité de routage (407) utilisable pour (i) transmettre le contenu reçu par l'unité de réception (408) audit un des dispositifs de réception (20, 30) identifié par l'identifiant de dispositif obtenu par l'unité d'évaluation (407) lorsqu'un résultat d'évaluation par l'unité d'évaluation est affirmatif, et (ii) interdire la transmission du contenu reçu par l'unité de réception (408) audit un des dispositifs de réception (20, 30) identifié par l'identifiant de dispositif obtenu par l'unité d'évaluation (407) lorsqu'un résultat d'évaluation par l'unité d'évaluation (407) est négatif ;
et
un dispositif de réception (20, 30) utilisable pour recevoir un contenu transmis par le dispositif de routage (40).

6. Système de distribution de contenu selon la revendication 5, comprenant en outre un dispositif de mise à jour de table (50) qui transmet au dispositif de routage (40) de l'information de mise à jour destinée à être utilisée pour mettre à jour une table d'évaluation (A430, B440) stockée dans le dispositif de routage (40), dans lequel le dispositif de routage (40) reçoit l'information de mise à jour du dispositif de mise à jour de table (50), et met à jour la table d'évaluation (A430, B440) sur base de l'information de mise à jour reçue.

7. Procédé de routage destiné à être utilisé dans un dispositif de routage qui route un contenu tel que
des données audio et vidéo à partir d'un dispositif de transmission (10) vers un ou plusieurs dispositifs de réception (20, 30), le dispositif de transmission (10), le dispositif de réception (20, 30) et le dispositif de routage (40) étant connectés à un réseau domestique,
**caractérisé en ce que**
le procédé de routage comprend les étapes suivantes, qui sont exécutées dans le dispositif de routage (40) :
une étape de stockage d'information de génération de table consistant à stocker (a) de l'information de catégorie indiquant une catégorie à laquelle appartient chaque dispositif de réception, en association avec (b) de l'information de contenu additionnelle dont l'utilisation par un dispositif de réception (20, 30) appartenant à la catégorie est permise,
une étape d'obtention d'information de dispositif consistant à obtenir, lorsqu'un dispositif de réception (20, 30) se connecte au réseau domestique pour la première fois, en provenance du dispositif de réception (20, 30), un identifiant de dispositif et un certificat, l'identifiant de dispositif comprenant de l'information de catégorie qui indique une catégorie à laquelle appartient le dispositif de réception (20, 30) ;
une étape de génération de table consistant à extraire, à partir de l'unité de stockage d'information de génération de table, l'information de contenu additionnelle dont l'utilisation est permise, par le dispositif de réception (20, 30) dont l'identifiant de dispositif a été obtenu à l'étape d'obtention d'information de dispositif, conformément à l'information de catégorie obtenue lors de l'étape d'obtention d'information de dispositif, et à générer une table d'évaluation (A430, B440) qui comprend l'information additionnelle extraite et l'identifiant de dispositif obtenu ;
une étape de stockage de table consistant à stocker une table de conversion d'adresse qui associe un identifiant de dispositif de chaque dispositif de réception (20, 30) à une adresse de réseau, et une ou plusieurs tables d'évaluation (A430, B440) générées lors de l'étape de génération de table ;
une étape de réception consistant à recevoir un contenu et une adresse de réseau d'un des dispositifs de réception (20, 30) en provenance du dispositif de transmission (10), le contenu comprenant de l'information additionnelle, l'information additionnelle indiquant un type du contenu et étant utilisée pour déterminer s'il est permis ou non de distribuer le contenu ;
une étape d'obtention d'identifiant de dispositif consistant à obtenir, à partir de la table de conversion d'adresse, un identifiant de dispositif qui est associé à l'adresse de réseau reçue lors de l'étape de réception,
une étape de sélection consistant à sélectionner, parmi les tables d'évaluation (A430, B440), une table d'évaluation qui comprend de l'information additionnelle correspondant à l'information additionnelle comprise dans le contenu reçu lors de l'étape de réception ;
une étape d'évaluation consistant à évaluer si l'identifiant de dispositif obtenu est compris ou non dans la table d'évaluation sélectionnée ;
et une étape de routage consistant à (i) transmettre le contenu reçu lors de l'étape de réception audit un des dispositifs de réception (20, 30) identifié par l'identifiant de dispositif obtenu à l'étape d'évaluation lorsqu'un résultat d'évaluation obtenu à l'étape d'évaluation est affirmatif, et (ii) interdire la transmission du contenu reçu par l'unité de réception (408) audit un des dispositifs de réception (20, 30) identifié par l'identifiant de dispositif obtenu par l'unité d'évaluation (407) lorsqu'un résultat d'évaluation de l'étape d'évaluation est négatif.

8. Produit logiciel chargeable dans la mémoire d'un ordinateur, comprenant toutes les parties de code logiciel pour mettre en oeuvre les étapes du procédé selon la revendication 7, lorsque ledit produit est exécuté sur un ordinateur.

9. Support d'enregistrement lisible par un ordinateur sur lequel est enregistré un programme de routage utilisé par un dispositif de routage qui route un contenu tel que des données audio et vidéo à partir d'un dispositif de transmission (10) vers un ou plusieurs dispositifs de réception (20, 30), le dispositif de transmission (10), le dispositif de réception (20, 30) et le dispositif de routage (40) étant connectés à un réseau domestique,
**caractérisé en ce que**
le programme de routage commande au dispositif de routage de mettre en oeuvre les étapes suivantes :
une étape de stockage d'information de génération de table consistant à stocker (a) de l'information de catégorie qui indique une catégorie à laquelle appartient chaque dispositif de réception, en association avec (b) de l'information de contenu additionnelle dont l'utilisation par un dispositif de réception appartenant à la catégorie est permise,
une étape d'obtention d'information de dispositif consistant à obtenir, lorsqu'un dispositif de réception se connecte au réseau domestique pour la première fois, à partir du dispositif de réception, un identifiant de dispositif et un certificat, l'identifiant de dispositif comprenant de l'information de catégorie qui indique une catégorie à laquelle appartient le dispositif de réception ;
une étape de génération de table consistant à extraire, à partir de l'unité de stockage d'information de génération de table, de l'information de contenu additionnelle dont l'utilisation est permise, par le dispositif de réception dont l'identifiant de dispositif a été obtenu à l'étape d'obtention d'information de dispositif, conformément à l'information de catégorie obtenue lors de l'étape d'obtention d'information de dispositif, et de génération d'une table d'évaluation qui comprend l'information additionnelle extraite et l'identifiant de dispositif obtenu ;
une étape de stockage de table consistant à stocker une table de conversion d'adresse associant un identifiant de dispositif de chaque dispositif de réception à une adresse de réseau, et une ou plusieurs tables d'évaluation générées lors de l'étape de génération de table ;
une étape de réception consistant à recevoir un contenu et une adresse de réseau d'un des dispositifs de réception en provenance du dispositif de transmission, le contenu comprenant de l'information additionnelle, l'information additionnelle indiquant un type du contenu et étant utilisée pour déterminer s'il est permis ou non de distribuer le contenu ;
une étape d'obtention d'identifiant de dispositif consistant à obtenir, à partir de la table de conversion d'adresse, un identifiant de dispositif qui est associé à l'adresse de réseau reçue lors de l'étape de réception,
une étape de sélection consistant à sélectionner, parmi les tables d'évaluation, une table d'évaluation qui comprend de l'information additionnelle correspondant à l'information additionnelle comprise dans le contenu reçu lors de l'étape de réception ;
une étape d'évaluation consistant à évaluer si l'identifiant de dispositif obtenu est compris ou non dans la table d'évaluation sélectionnée ;
et une étape de routage consistant à (i) transmettre le contenu reçu lors de l'étape de réception audit un des dispositifs de réception identifié par l'identifiant de dispositif obtenu à l'étape d'évaluation lorsqu'un résultat d'évaluation de l'étape d'évaluation est affirmatif, et (ii) interdire la transmission du contenu reçu par l'unité de réception (408) audit un des dispositifs de réception (20, 30) identifié par l'identifiant de dispositif obtenu par l'unité d'évaluation (407) lorsqu'un résultat d'évaluation de l'étape d'évaluation est négatif.
